# EUROPEAN PATENT APPLICATION

(11) **EP 4 556 115 A1**
(43) Date of publication of application: **21.05.2025**
(21) Application number: 23839579.2
(22) Date of filing: 07.07.2023
(51) Int. Cl.: B01J 23/63, B01D 53/94, B01J 35/56, F01N 3/10, F01N 3/24

(54) **EXHAUST GAS PURIFICATION CATALYST COMPOSITION, EXHAUST GAS PURIFICATION CATALYST, AND EXHAUST GAS PURIFICATION SYSTEM**

(30) Priority: 13.07.2022 JP 2022112637; 14.11.2022 JP 2022182083
(71) Applicant: Mitsui Mining & Smelting Co., Ltd., Shinagawa-ku Tokyo 141-8584 (JP)
(72) Inventor: ISAYAMA, Akihiro, Ageo-shi, Saitama 362-0025 (JP); WATANABE, Tokuya, Ageo-shi, Saitama 362-0025 (JP); IWAKURA, Hironori, Ageo-shi, Saitama 362-0025 (JP)
(74) Representative: Novagraaf Technologies
(86) International application number: PCT/JP2023/025268
(87) International publication number: WO 2024/014407

(57) **Abstract**

An object of the present invention is to provide a new technique to realize both the exhaust gas purification performance in a low temperature environment and the ability to maintain NOx adsorbed in a low temperature environment until the environment becomes a high temperature environment, while utilizing Pt, and the present invention provides an exhaust gas purification catalyst composition containing Pt and Sr, wherein a content of Sr in terms of metal is 0.1% by mass or more and 9.0% by mass or less based on a mass of the exhaust gas purification catalyst composition.

## Description

### FIELD OF THE INVENTION

The present invention relates to an exhaust gas purification catalyst composition, an exhaust gas purification catalyst and an exhaust gas purification system.

### BACKGROUND ART

Exhaust gas emitted from an internal combustion engine of an automobile, a motorcycle or the like contains harmful components such as hydrocarbon (HC), carbon monoxide (CO) and nitrogen oxide (NOx). A three-way catalyst is used to purify and detoxify those harmful components. A catalyst containing noble metal elements such as platinum element (Pt), palladium element (Pd) and rhodium element (Rh) is used as a three-way catalyst. Pt and Pd are mainly involved in oxidative purification of HC and CO and Rh is mainly involved in reductive purification of NOx.

Various techniques have been developed to improve the exhaust gas purification performance of a catalyst. For example, Patent Document 1 discloses a technique for forming a catalyst layer including: a lower layer containing Pd and an alkaline-earth metal element; and an upper layer containing Rh on the upstream side of a substrate, and a catalyst layer including: a lower layer containing Pt and an alkaline-earth metal element; and an upper layer containing Rh on the downstream side of the substrate. In addition, Patent Document 2 discloses a technique for forming a catalyst layer including: a lower layer containing Pd and Ba; and an upper layer containing Rh on the upstream side of a substrate, and a catalyst layer including: a lower layer containing Pt and Ba; and an upper layer containing Rh on the downstream side of the substrate.

### CITATION LIST

### PATENT DOCUMENT

Patent Document 1: Japanese Patent Laid-Open No. 2020-157263
Patent Document 2: Japanese Patent Laid-Open No. 2016-185495

### SUMMARY OF THE INVENTION

### TECHNICAL PROBLEM

From the viewpoint of cost reduction, a catalyst is required to utilize Pt instead of Rh and Pd.

When the environment in which a catalyst is placed is a low temperature environment immediately after start-up of an internal combustion engine, a catalytically active component in the catalyst is not fully activated, and thus the exhaust gas purification performance of the catalyst is not sufficient. Therefore, a catalyst is required to exert exhaust gas purification performance in a low temperature environment.

If NOx adsorption performance is imparted to a catalyst, this will compensate for the exhaust gas purification performance of the catalyst in a low temperature environment. Specifically, if NOx that is not purified by a catalyst in a low temperature environment is adsorbed onto the catalyst, maintained on the catalyst until the environment in which the catalyst is placed becomes a high temperature environment, and released after the environment in which the catalyst is placed becomes a high temperature environment (i.e., after a catalytically active component in the catalyst is activated), the released NOx will be more effectively purified by the activated catalytically active component, thereby compensating for the exhaust gas purification performance of the catalyst in a low temperature environment. Therefore, a catalyst is required to have an ability to maintain NOx adsorbed in a low-temperature environment until the environment becomes a high temperature environment.

As described above, a catalyst is required to realize both the exhaust gas purification performance in a low temperature environment and the ability to maintain NOx adsorbed in a low-temperature environment until the environment becomes a high temperature environment, while utilizing Pt.

Accordingly, an object of the present invention is to provide a new technique to realize both the exhaust gas purification performance in a low temperature environment and the ability to maintain NOx adsorbed in a low temperature environment until the environment becomes a high temperature environment, while utilizing Pt.

In the present specification, the term "low temperature" means a temperature of preferably 370°C or less, more preferably 350°C or less, and still more preferably 330°C or less.

In the present specification, the term "high temperature" means a temperature of preferably more than 500°C, more preferably 520°C or more, and still more preferably 540°C or more.

### SOLUTION TO PROBLEM

The present inventors have found that addition of Ba or Mg to a catalyst layer containing Pt can realize neither the exhaust gas purification performance in a low temperature environment nor the ability to maintain NOx adsorbed in a low temperature environment until the environment becomes a high temperature environment, and that addition of Sr to a catalyst layer containing Pt can realize both the exhaust gas purification performance in a low temperature environment and the ability to maintain NOx adsorbed in a low temperature environment until the environment becomes a high temperature environment, whereas addition of excessive Sr to a catalyst layer containing Pt decrease the exhaust gas purification performance in a low temperature environment, thereby completing the present invention.

The present invention encompasses the following inventions.
[1] An exhaust gas purification catalyst composition containing Pt and Sr, wherein a content of Sr in terms of metal is 0.1% by mass or more and 9.0% by mass or less based on a mass of the exhaust gas purification catalyst composition.
[2] The exhaust gas purification catalyst composition according to [1], wherein a content of an alkaline-earth metal element other than Sr in terms of metal is 4.0% by mass or less based on the mass of the exhaust gas purification catalyst composition.
[3] The exhaust gas purification catalyst composition according to [1] or [2], wherein Sr is present in one or two forms selected from SrO and SrCO₃.
[4] The exhaust gas purification catalyst composition according to any one of [1] to [3], wherein the exhaust gas purification catalyst composition contains a modified alumina containing La, and wherein a content of La derived from the modified alumina in terms of La₂O₃ is 0.20% by mass or more and 5.0% by mass or less based on the mass of the exhaust gas purification catalyst composition.
[5] An exhaust gas purification catalyst including a substrate and a first catalyst layer provided on the substrate, wherein the first catalyst layer is composed of the exhaust gas purification catalyst composition according to any one of [1] to [4].
[6] The exhaust gas purification catalyst according to [5], wherein the exhaust gas purification catalyst further includes a second catalyst layer provided on the substrate and/or a third catalyst layer provided on the substrate, wherein the second catalyst layer is provided on an upside of the first catalyst layer, and wherein the third catalyst layer is provided on an upstream side of the first catalyst layer.
[7] The exhaust gas purification catalyst according to [6], wherein the second catalyst layer and/or the third catalyst layer contains Rh.
[8] The exhaust gas purification catalyst according to [6] or [7], wherein a content of an alkaline-earth metal element in terms of metal in the second catalyst layer is 5.0% by mass or less based on a mass of the second catalyst layer, and wherein a content of an alkaline-earth metal element in terms of metal in the third catalyst layer is 5.0% by mass or less based on a mass of the third catalyst layer.
[9] An exhaust gas purification system including: an exhaust gas path through which exhaust gas flows; a first exhaust gas purification catalyst provided on a downstream side of the exhaust gas path; and a second exhaust gas purification catalyst provided on an upstream side of the exhaust gas path, wherein the first exhaust gas purification catalyst includes a first substrate and a catalyst layer provided on the first substrate, and wherein the catalyst layer provided on the first substrate is composed of the exhaust gas purification catalyst composition according to any one of [1] to [4].
[10] The exhaust gas purification system according to [9], wherein the second exhaust gas purification catalyst includes a second substrate and a catalyst layer provided on the second substrate.
[11] The exhaust gas purification system according to [10], wherein the catalyst layer provided on the second substrate contains Rh.
[12] The exhaust gas purification system according to [10] or [11], wherein a content of an alkaline-earth metal element in terms of metal in the catalyst layer provided on the second substrate is 5.0% by mass or less based on a mass of the catalyst layer provided on the second substrate.

### ADVANTAGEOUS EFFECTS OF INVENTION

According to the present invention, there is provided a new technique to realize both the exhaust gas purification performance in a low temperature environment and the ability to maintain NOx adsorbed in a low temperature environment until the environment becomes a high temperature environment, while utilizing Pt.

### BRIEF DESCRIPTION OF THE DRAWINGS

Figure 1 is a partial end view showing a state in which an exhaust gas purification catalyst according to a first embodiment of the present invention is disposed in an exhaust gas path of an internal combustion engine.
Figure 2 is an end view taken along line A-A of Figure 1.
Figure 3 is an enlarged view of a region denoted by the reference sign R in Figure 2.
Figure 4 is an end view taken along line B-B of Figure 1.
Figure 5 is an end view (corresponding to Figure 4) of an exhaust gas purification catalyst according to a second embodiment of the present invention.
Figure 6 is an end view (corresponding to Figure 4) of an exhaust gas purification catalyst according to a third embodiment of the present invention.
Figure 7 is a plan view of an exhaust gas purification system according to one embodiment of the present invention.
Figure 8 is an end view taken along line D-D of Figure 7.

### DETAILED DESCRIPTION OF THE INVENTION

### <<Description of term>>

In the present specification, the term "alkaline-earth metal element" means an element selected from Be, Mg, Ca, Sr, Ba and Ra.

### <<Exhaust gas purification catalyst composition>>

The exhaust gas purification catalyst composition of the present invention will now be described. In the present specification, an "exhaust gas purification catalyst composition" may be referred to as a "catalyst composition".

The catalyst composition of the present invention is in the form of, for example, a powder, a molded body, a layered body, or the like.

The catalyst composition of the present invention contains Pt.

Pt contained in the catalyst composition of the present invention is in the form capable of functioning as a catalytically active component, for example, in the form of a catalytically active component containing Pt, such as metal Pt, an alloy containing Pt, a compound containing Pt (e.g., an oxide of Pt), or the like. From the viewpoint of improving the exhaust gas purification performance, it is preferable that the catalytically active component containing Pt is in the form of a particle.

From the viewpoint of balancing the exhaust gas purification performance and the cost, the content of Pt in terms of metal in the catalyst composition of the present invention is preferably 0.050% by mass or more and 5.0% by mass or less, more preferably 0.10% by mass or more and 3.0% by mass or less, and still more preferably 0.30% by mass or more and 1.0% by mass or less, based on the mass of the catalyst composition of the present invention.

In the present specification, the expression "the mass of a catalyst composition" means the total mass calculated by categorizing all metal elements contained in the catalyst composition into a noble metal element(s) and a metal element(s) other than the noble metal element(s), obtaining the mass(es) of the noble metal element(s) in terms of metal and the mass(es) of the metal element(s) other than the noble metal element(s) in terms of oxide, and totalizing the obtained masses. That is, the expression "the mass of a catalyst composition" means the calculated mass obtained by totalizing the mass(es) of a noble metal element(s) in terms of metal in the catalyst composition and the mass(es) of a metal element(s) other than the noble metal element(s) in terms of oxide in the catalyst composition. The term "metal element" encompasses a metalloid element such as Si, B, or the like.

In the present specification, the term "noble metal element" encompasses Pt, Pd, Rh, Au, Ag, Ru, Ir and Os.

In the present specification, an oxide of Al means Al₂O₃, an oxide of Si means SiO₂, an oxide of B means B₂O₃, an oxide of Zr means ZrO₂, an oxide of Be means BeO, an oxide of Mg means MgO, an oxide of Ca means CaO, an oxide of Sr means SrO, an oxide of Ba means BaO, an oxide of Ra means RaO, an oxide of Ti means TiO₂, an oxide of Ni means NiO, and an oxide of P means P₂O₅. An oxide of a rare earth element except for Ce, Pr and Tb means a sesquioxide (Ln₂O₃), an oxide of Ce means CeO₂, an oxide of Pr means Pr₆O₁₁, and an oxide of Tb means Tb₄O₇.

In the case where the composition of raw materials used for producing the catalyst composition of the present invention is known, the content of Pt in terms of metal in the catalyst composition of the present invention can be determined from the composition of the raw materials used for producing the catalyst composition of the present invention.

In the case where the composition of raw materials used for producing the catalyst composition of the present invention is not known, the content of Pt in terms of metal in the catalyst composition of the present invention can be determined using a conventional method such as scanning electron microscopy-energy dispersive X-ray spectroscopy (SEM-EDX). A specific example is as mentioned below.

Elemental analysis using a conventional method such as SEM-EDX is performed on a sample obtained from the catalyst composition of the present invention to identify the types of constituent elements of the entire sample and obtain the content (% by mass) of the target element in terms of metal. From each of 10 fields of view in SEM, the content (% by mass) of the target element in terms of metal is obtained. The average of the contents (% by mass) of the target element in terms of metal obtained from the 10 fields of view is defined as the content (% by mass) of the target element in terms of metal in the catalyst composition of the present invention.

The catalyst composition of the present invention may contain a noble metal element other than Pt. Examples of the noble metal element other than Pt include Au, Ag, Pd, Rh, Ir, Ru, Os, and the like. The noble metal element other than Pt contained in the catalyst composition of the present invention is in the form capable of functioning as a catalytically active component, for example, in the form of a catalytically active component containing the noble metal element other than Pt, such as metal, an alloy containing the noble metal element, a compound containing the noble metal element (e.g., an oxide of the noble metal element), or the like. From the viewpoint of improving the exhaust gas purification performance, it is preferable that the catalytically active component containing the noble metal element other than Pt is in the form of a particle.

In the case where the catalyst composition of the present invention contains Pt and the noble metal element other than Pt, Pt and the noble metal element other than Pt may form an alloy, thereby decreasing the active sites of Pt participating in exhaust gas purification. Accordingly, it is preferable that the catalyst composition of the present invention is substantially free from the noble metal element other than Pt. The expression "substantially free from the noble metal element other than Pt" means that the content of the noble metal element other than Pt in terms of metal in the catalyst composition of the present invention is preferably 0.050% by mass or less, and more preferably 0.010% by mass or less, based on the mass of the catalyst composition of the present invention. The lower limit is zero. The expression "the content of the noble metal element other than Pt in terms of metal in the catalyst composition of the present invention" means, in the case where the catalyst composition of the present invention contains one noble metal element other than Pt, the content of the one noble metal element other than Pt in terms of metal, and means, in the case where the catalyst composition of the present invention contains two or more noble metal elements other than Pt, the total content of the two or more noble metal elements other than Pt in terms of metal. The content of the noble metal element other than Pt in terms of metal in the catalyst composition of the present invention can be determined in the same manner as the content of Pt in terms of metal in the catalyst composition of the present invention.

The catalyst composition of the present invention contains Sr.

The catalyst composition of the present invention contains Sr in addition to Pt, and thus can realize both the exhaust gas purification performance in a low temperature environment and the ability to maintain NOx adsorbed in a low temperature environment until the environment becomes a high temperature environment, while utilizing Pt.

The basic site amount per unit mass of Sr and the basic site strength of Sr are associated with these effects. The basic site amount per unit mass is associated with the NOx adsorption amount, and the basic site strength is associated with the NOx adsorption force (i.e., for an element, the greater the basic site amount per unit mass of the element, the greater the NOx adsorption amount of the element, and the greater the basic site strength of the element, the greater the NOx adsorption force of the element). Ba and Mg do not have sufficient basic site amount per unit mass and/or sufficient basic site strength (sufficient NOx adsorption amount and/or sufficient NOx adsorption force), and thus cannot maintain NOx adsorbed in a low-temperature environment until the environment becomes a high temperature environment. In contrast, Sr has sufficient basic site amount per unit mass and sufficient basic site strength, and thus can maintain NOx adsorbed in a low-temperature environment until the environment becomes a high temperature environment. Therefore, NOx that is not purified in a low temperature environment is adsorbed onto Sr, maintained on Sr until the environment in which a catalytically active component (including, but is not limited to, Pt in the catalyst composition of the present invention) is placed becomes a high temperature environment, and released after the environment in which the catalytically active component is placed becomes a high temperature environment (i.e., after the catalytically active component is activated). The released NOx is more effectively purified by the activated catalytically active component. In this manner, Sr can compensate for the exhaust gas purification performance of a catalytically active component in a low temperature environment.

When the content of Sr in terms of metal in the catalyst composition of the present invention is too small, the effect of Sr is not fully demonstrated. On the other hand, when the content of Sr in terms of metal in the catalyst composition of the present invention is too large, the exhaust gas purification performance of Pt in a low temperature environment is decreased. Sr stabilizes oxidized state of Pt and inactivates Pt, which is considered to be associated with the decrease in the exhaust gas purification performance of Pt. Therefore, the content of Sr in terms of metal in the catalyst composition of the present invention is preferably 0.1% by mass or more and 9.0% by mass or less, more preferably 0.5% by mass or more and 7.0% by mass or less, and still more preferably 1.0% by mass or more and 5.0% by mass or less, based on the mass of the catalyst composition of the present invention. The content of Sr in terms of metal in the catalyst composition of the present invention can be determined in the same manner as the content of Pt in terms of metal in the catalyst composition of the present invention.

The catalyst composition of the present invention contains one or two or more Sr sources. The Sr source is not particularly limited as long as the Sr source is a compound containing Sr.

From the viewpoint of more effectively realizing both the exhaust gas purification performance in a low temperature environment and the ability to maintain NOx adsorbed in a low-temperature environment until the environment becomes a high temperature environment, while utilizing Pt, one or two or more selected from SrO, SrCO₃ and Sr(NO₃)₂ are preferably used as the Sr source, and one or two selected from SrO and SrCO₃ are more preferably used as the Sr source. That is, in the catalyst composition of the present invention, Sr is present preferably in one or two or more forms selected from SrO, SrCO₃ and Sr(NO₃)₂, and more preferably in one or two forms selected from SrO and SrCO₃.

Sr(NO₃)₂ can be used as a raw material for producing the catalyst composition of the present invention, and is converted to SrO by calcination.

The catalyst composition of the present invention may contain one or two or more alkaline-earth metal elements other than Sr. The alkaline-earth metal element other than Sr is selected from Be, Mg, Ca, Ba and Ra.

From the viewpoint of more effectively realizing both the exhaust gas purification performance in a low temperature environment and the ability to maintain NOx adsorbed in a low-temperature environment until the environment becomes a high temperature environment, while utilizing Pt, the content of the alkaline-earth metal element other than Sr in terms of metal in the catalyst composition of the present invention is preferably 4.0% by mass or less, more preferably 2.0% by mass or less, and still more preferably 1.0% by mass or less, based on the mass of the catalyst composition of the present invention. The lower limit is zero. The expression "the content of the alkaline-earth metal element other than Sr in terms of metal in the catalyst composition of the present invention" means, in the case where the catalyst composition of the present invention contains one alkaline-earth metal element other than Sr, the content of the one alkaline-earth metal element in terms of metal, and means, in the case where the catalyst composition of the present invention contains two or more alkaline-earth metal elements other than Sr, the total content of the two or more alkaline-earth metal elements in terms of metal. The content of the alkaline-earth metal element other than Sr in the catalyst composition of the present invention can be determined in the same manner as the content of Pt in terms of metal in the catalyst composition of the present invention.

The form in which the alkaline-earth metal element other than Sr is present is not particularly limited. In the catalyst composition of the present invention, the alkaline-earth metal element other than Sr can be present in one or two or more forms selected from, for example, an oxide, a carbonate, a nitrate and a sulfate.

The catalyst composition of the present invention may contain one or two or more carriers. In the case where the catalyst composition of the present invention contains a carrier, it is preferable that at least part of a catalytically active component is supported on the carrier. The expression that "at least part of a catalytically active component is supported on a carrier" means a state in which at least part of the catalytically active component is physically and/or chemically adsorbed and/or retained on the outer surface of the carrier and/or on the inner surface of pores of the carrier. Whether at least part of a catalytically active component is supported on a carrier can be confirmed using, for example, SEM-EDX or the like. Specifically, when an element mapping obtained by analyzing a catalyst composition by SEM-EDX shows that at least part of a catalytically active component and a carrier exist in the same region, at least part of the catalytically active component can be judged as supported on the carrier.

Examples of the carrier include an inorganic oxide and the like. In the present specification, the term "inorganic oxide" means an inorganic oxide other than oxides of alkaline-earth metal elements (i.e., BeO, MgO, CaO, SrO, BaO and RaO), unless otherwise defined.

The inorganic oxide is, for example, in the form of a particle. The inorganic oxide is preferably porous from the viewpoint that a catalytically active component is easily supported thereon. The inorganic oxide may have oxygen storage capacity (OSC: Oxygen Storage Capacity), or may not have oxygen storage capacity. In the present specification, the inorganic oxide having oxygen storage capacity may be referred to as an "OSC material". The inorganic oxide used as a carrier is distinct from an inorganic oxide used as a binder (e.g., an inorganic oxide binder such as an alumina binder, a zirconia binder, a titania binder, a silica binder, or the like).

Examples of the inorganic oxide include an Al-based oxide, a Ce-Zr-based complex oxide, an oxide of a rare earth element (e.g., Y₂O₃, CeO₂ or the like), ZrO₂, SiO₂, TiO₂, NiO, and the like.

In the present specification, when, in an oxide containing Ce, Zr and Al, the content of Ce in terms of CeO₂ is equal to or greater than the content of Al in terms of Al₂O₃, the oxide containing Ce, Zr and Al falls into the category of the Ce-Zr-based complex oxide, and when, in an oxide containing Ce, Zr and Al, the content of Ce in terms of CeO₂ is smaller than the content of Al in terms of Al₂O₃, the oxide containing Ce, Zr and Al falls into the category of the Al-based oxide.

The Al-based oxide generally has higher heat resistance than other inorganic oxides (e.g., a Ce-Zr-based complex oxide). When the catalyst composition of the present invention contains the Al-based oxide, the heat resistance of the catalyst composition of the present invention is improved, and thus the exhaust gas purification performance of the catalyst composition of the present invention is improved.

The Al-based oxide contains Al and O. Examples of the Al-based oxide include alumina (Al₂O₃), a modified alumina, and the like. The Al-based oxide is distinct from alumina used as a binder (which may be referred to as an "alumina binder" in the present specification). The alumina binder is derived from an alumina sol used as a raw material of a catalyst composition. The modified alumina contains one or two or more elements other than Al and O. Examples of the modified alumina include an oxide obtained by modifying the surface of alumina with an element other than Al and O, an oxide obtained by dissolving an element other than Al and O in alumina, and the like. In the Al-based oxide, an element other than Al and O may form a solid solution phase together with Al and O, or may form a single phase (e.g., an oxide phase of the element other than Al and O) that is a crystal phase or an amorphous phase, or may form both the solid solution phase and the single phase.

From the viewpoint of improving the heat resistance, the content of Al in terms of oxide in the Al-based oxide is preferably 90% by mass or more, more preferably 95% by mass or more, and still more preferably 98% by mass or more, based on the mass of the Al-based oxide. The upper limit is 100% by mass.

In the case where the composition of raw materials used for producing the catalyst composition of the present invention is known, the content of Al in terms of Al₂O₃ in the Al-based oxide can be determined from the composition of raw materials used for producing the catalyst composition of the present invention.

In the case where the composition of raw materials used for producing the catalyst composition of the present invention is not known, the content of Al in terms of Al₂O₃ in the Al-based oxide can be determined by analyzing a sample obtained from the catalyst composition of the present invention by energy dispersive X-ray spectroscopy (EDX) to obtain an element mapping, and performing EDX elemental analysis on a designated particle in the obtained element mapping. Specifically, the content of the target element in terms of oxide in the designated particle can be determined by qualitatively identifying (color-coding) an Al-based oxide particle and other oxide particle(s) (e.g., a Ce-Zr-based complex oxide particle) by elemental mapping and performing composition analysis (elemental analysis) on the designated particle.

From the viewpoint of improving the heat resistance, the content of the Al-based oxide in the catalyst composition of the present invention is preferably 10% by mass or more and 95% by mass or less, more preferably 20% by mass or more and 90% by mass or less, and still more preferably 30% by mass or more and 80% by mass or less, based on the mass of the catalyst composition of the present invention.

In the case where the composition of raw materials used for producing the catalyst composition of the present invention is known, the content of the Al-based oxide in the catalyst composition of the present invention can be determined from the composition of raw materials used for producing the catalyst composition of the present invention.

In the case where the composition of raw materials used for producing the catalyst composition of the present invention is not known, the content of the Al-based oxide in the catalyst composition of the present invention can be determined using a conventional method such SEM-EDX. A specific example is as mentioned below.
(A) Elemental analysis using a conventional method such SEM-EDX is performed on a sample obtained from the catalyst composition of the present invention to identify the types of constituent elements of the entire sample, and to obtain the content (% by mass) of the target element in terms of oxide.
(B) Elemental mapping by a conventional method such SEM-EDX is performed on a sample obtained from the catalyst composition of the present invention to identify the types of particles contained in the sample (e.g., an Al-based oxide particle, a Ce-Zr-based complex oxide particle, and optionally other particle(s)).
(C) For each type of particle, elemental analysis by SEM-EDX is performed on a plurality of randomly selected particles (e.g., 50 particles) to identify the types of constituent elements of the particles and to obtain the content (% by mass) of the target element in terms of oxide. For each type of particle, the average value of the content (% by mass) of the target element in terms of oxide is obtained, and the average value is defined as the content (% by mass) of the target element in terms of oxide in each type of particle.
(D) The content (% by mass) of each type of particle in the sample is calculated by drawing up and solving equations representing the relationship among the content (% by mass) of the target element in terms of oxide in the sample, the content (% by mass) of the target element in terms of oxide in each type of particle, and the content (% by mass) of each type of particle in the sample, and is defined as the content (% by mass) of each type of particle in the catalyst composition of the present invention.

The element other than Al and O in the modified alumina can be selected from La, Zr, Ce, Pr, Ba, Mg, P, Ni and the like, and is preferably La from the viewpoint of improving the heat resistance.

From the viewpoint of improving the heat resistance, the content of La in terms of La₂O₃ in the modified alumina is preferably 0.10% by mass or more and 20% by mass or less, more preferably 0.50% by mass or more and 15% by mass or less, and still more preferably 1.0% by mass or more and 10% by mass or less, based on the mass of the modified alumina. The content of La in terms of La₂O₃ in the modified alumina can be determined in the same manner as the content of Al in terms of Al₂O₃ in the Al-based oxide.

From the viewpoint of improving the heat resistance, the catalyst composition of the present invention preferably contains a modified alumina containing La. From the viewpoint of improving the heat resistance, the content of La derived from the modified alumina in terms of La₂O₃ is preferably 0.20% by mass or more and 5.0% by mass or less, more preferably 0.30% by mass or more and 3.0% by mass or less, based on the mass of the catalyst composition of the present invention. The content of La derived from the modified alumina in terms of La₂O₃ can be determined from the content of the modified alumina in the catalyst composition of the present invention and the content of La in terms of La₂O₃ in the modified alumina.

The Ce-Zr-based complex oxide has an oxygen storage capacity (i.e., an ability to absorb oxygen when the oxygen concentration in exhaust gas is high and release oxygen when the oxygen concentration in exhaust gas is low), and mitigate fluctuations in the oxygen concentration in exhaust gas and expand the operating window of a catalytically active component. Therefore, when the catalyst composition of the present invention contains the Ce-Zr-based complex oxide, the exhaust gas purification performance of the catalyst composition of the present invention is improved. In particular, when the catalyst composition of the present invention contains the Ce-Zr-based complex oxide and is used as a three-way catalyst for purifying exhaust gas emitted from a gasoline engine, both control of oxygen concentration by the Ce-Zr-based complex oxide and control of NOx concentration by Sr in the catalyst composition of the present invention are achieved. As a result, the exhaust gas atmosphere becomes favorable for Pt in the catalyst composition of the present invention to exhibit catalytic activity, and thus the purification performance of Pt is further improved. Usually, a catalyst for purifying exhaust gas emitted from a diesel engine does not contain a material with oxygen storage capacity, such as the Ce-Zr-based complex oxide. This is because in a diesel engine, combustion in fuel-lean atmosphere with excessive intake air significantly increases the oxygen concentration in exhaust gas, and thus the amount of oxygen in exhaust gas greatly exceeds the amount that can be stored by the Ce-Zr-based complex oxide or the like.

The Ce-Zr-based complex oxide contains Ce, Zr and O. In the Ce-Zr-based complex oxide, Ce, Zr and O preferably form a solid solution phase. Ce, Zr and O may form a single phase (e.g., a CeO₂ phase, a ZrO₂ phase or the like) that is a crystal phase or an amorphous phase in addition to the solid solution phase. The fact that Ce, Zr and O form the solid solution can be confirmed using SEM-EDX or the like.

From the viewpoint of improving the oxygen storage capacity, the content of Ce in terms of CeO₂ in the Ce-Zr-based complex oxide is preferably 5.0% by mass or more and 80% by mass or less, more preferably 10% by mass or more and 60% by mass or less, and still more preferably 20% by mass or more and 50% by mass or less, based on the mass of the Ce-Zr-based complex oxide. The content of Ce in terms of CeO₂ in the Ce-Zr-based complex oxide can be determined in the same manner as the content of Al in terms of Al₂O₃ in the Al-based oxide.

From the viewpoint of improving the heat resistance, the content of Zr in terms of ZrO₂ in the Ce-Zr-based complex oxide is preferably 10% by mass or more and 90% by mass or less, more preferably 30% by mass or more and 80% by mass or less, and still more preferably 40% by mass or more and 70% by mass or less, based on the mass of the Ce-Zr-based complex oxide. The content of Zr in terms of ZrO₂ in the Ce-Zr-based complex oxide can be determined in the same manner as the content of Al in terms of Al₂O₃ in the Al-based oxide.

From the viewpoint of improving the oxygen storage capacity and the heat resistance, the total content of Ce in terms of CeO₂ and Zr in terms of ZrO₂ in the Ce-Zr-based complex oxide is preferably 70% by mass or more, more preferably 80% by mass or more, and still more preferably 90% by mass or more, based on the mass of the Ce-Zr-based complex oxide. The upper limit is 100% by mass.

The Ce-Zr-based complex oxide may contain one or two or more metal elements other than Ce and Zr. Examples of the metal element other than Ce and Zr include a rare earth element other than Ce, and the like. Examples of the rare earth element other than Ce include Y, Pr, Sc, La, Nd, Sm, Eu, Gd, Tb, Dy, Ho, Er, Tm, Yb, Lu, and the like. The metal element other than Ce and Zr may form a solid solution phase together with Ce, Zr and O, or may form a single phase that is a crystal phase or an amorphous phase, or may form both the solid solution phase and the single phase.

From the viewpoint of improving the oxygen storage capacity and the heat resistance, the content of the Ce-Zr-based complex oxide in the catalyst composition of the present invention is preferably 10% by mass or more and 90% by mass or less, more preferably 20% by mass or more and 70% by mass or less, and still more preferably 30% by mass or more and 50% by mass or less, based on the mass of the catalyst composition of the present invention. The content of the Ce-Zr-based complex oxide in the catalyst composition can be determined in the same manner as the content of the Al-based oxide in the catalyst composition of the present invention.

From the viewpoint of improving the noble metal dispersibility, the oxygen storage capacity and the heat resistance, the content of the inorganic oxide other than the Al-based oxide and the Ce-Zr-based complex oxide in the catalyst composition of the present invention is preferably 1.0% by mass or more and 50% by mass or less, more preferably 2.0% by mass or more and 30% by mass or less, and still more preferably 5.0% by mass or more and 20% by mass or less, based on the mass of the catalyst composition of the present invention. The expression "the content of the inorganic oxide other than the Al-based oxide and the Ce-Zr-based complex oxide in the catalyst composition of the present invention" means, in the case where the catalyst composition of the present invention contains one inorganic oxide other than the Al-based oxide and the Ce-Zr-based complex oxide, the content of the one inorganic oxide, and means, in the case where the catalyst composition of the present invention contains two or more inorganic oxides other than the Al-based oxide and the Ce-Zr-based complex oxide, the total content of the two or more inorganic oxides. The content of the inorganic oxide other than the Al-based oxide and the Ce-Zr-based complex oxide in the catalyst composition of the present invention can be determined in the same manner as the content of the Al-based oxide in the catalyst composition of the present invention.

From the viewpoint of effectively suppressing A/F fluctuation, the content of Ce in terms of CeO₂ in the catalyst composition of the present invention is preferably 1% by mass or more, more preferably 10% by mass or more, and still more preferably 13% by mass or more, based on the mass of the catalyst composition of the present invention. From the viewpoint of suppressing oxidation of Pt, the content of Ce in terms of CeO₂ in the catalyst composition of the present invention is preferably 50% by mass or less, more preferably 40% by mass or less, and still more preferably 30% by mass or less, based on the mass of the catalyst composition of the present invention. Each of these upper limits may be combined with any of the above-described lower limits. The expression "the content of Ce in terms of CeO₂ in the catalyst composition of the present invention" means, in the case where the catalyst composition of the present invention contains one Ce source, the content of Ce derived from the one Ce source in terms of CeO₂, and means, in the case where the catalyst composition of the present invention contains two or more Ce sources, the total content of Ce derived from the two or more Ce sources in terms of CeO₂. The Ce source is not particularly limited as long as the Ce source is an oxide containing Ce. Examples of the Ce source include a Ce-Zr-based complex oxide, ceria (CeO₂), an oxide containing Ce and a rare earth element other than Ce, an Al-based oxide containing Ce, and the like. In the case where the composition of raw materials used for producing the catalyst composition of the present invention is known, the content of Ce in terms of CeO₂ in the catalyst composition of the present invention can be determined from the composition of raw materials used for producing the catalyst composition of the present invention. In the case where the composition of raw materials used for producing the catalyst composition of the present invention is not known, the content of Ce in terms of CeO₂ in the catalyst composition of the present invention can be determined using a conventional method such inductively coupled plasma atomic emission spectroscopy (ICP), X-ray fluorescence spectroscopy (XRF), SEM-EDX, or the like.

The catalyst composition of the present invention can be produced, for example, by mixing a Pt supply source, a Sr supply source and other component(s) (e.g., an inorganic oxide, a binder, a solvent, and the like), followed by drying and calcination. The calcined product may be pulverized as necessary. The pulverization can be carried out by a dry process or a wet process, using, for example, a mortar, a hammer mill, a ball mill, a bead mill, a jet mill, a roller mill, or the like. Examples of the Pt supply source include a Pt salt. Examples of the Pt salt include a nitrate, an ammine complex salt, a chloride, and the like. Examples of the Sr supply source include a Sr salt. Examples of the Sr salt include a nitrate, an acetate, a carbonate, a chloride, and the like. Examples of the binder include an alumina sol, a zirconia sol, a titania sol, a silica sol, a ceria sol, and the like. Examples of the solvent include water, an organic solvent, and the like. The drying temperature is, for example, 70°C or more and 150°C or less, and the drying time is, for example, 5 minutes or more and 1 hour or less. The calcination temperature is, for example, 200°C or more and 700°C or less, and the calcination time is, for example, 0.5 hours or more and 5 hours or less. The calcination can be carried out, for example, in an air atmosphere.

### <<Exhaust gas purification catalyst>>

The exhaust gas purification catalyst of the present invention will now be described.

### <<First embodiment>>

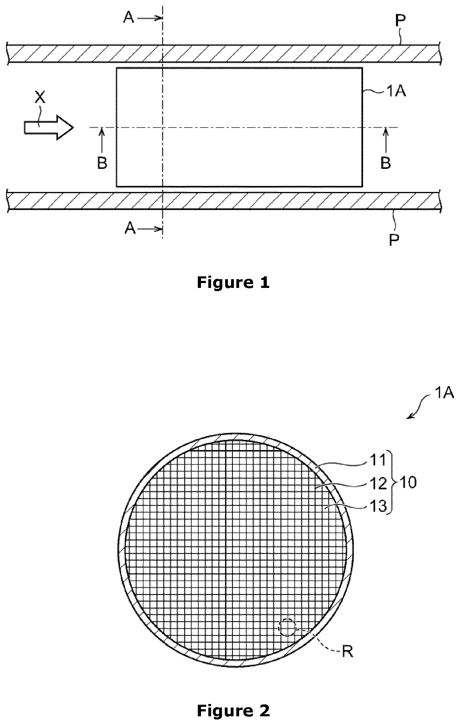

Hereinafter, an exhaust gas purification catalyst 1A (which may be referred to as a "catalyst 1A" in the present specification) according to a first embodiment of the present invention will be described with reference to Figures 1 to 4.

As shown in Figure 1, the catalyst 1A is disposed in an exhaust gas path in an exhaust pipe P of an internal combustion engine. The internal combustion engine is, for example, a gasoline engine. Exhaust gas emitted from the internal combustion engine flows through the exhaust gas path in the exhaust pipe P from one end to the other end of the exhaust pipe P, and is purified by the catalyst 1A provided in the exhaust pipe P. In the drawings, the exhaust gas flow direction is denoted by the reference sign X. In the present specification, the upstream position in the exhaust gas flow direction X may be referred to as an "exhaust gas inflow side" or an "upstream side", and the downstream position in the exhaust gas flow direction X may be referred to as an "exhaust gas outflow side" or an "downstream side".

In the exhaust gas path of the exhaust pipe P, another exhaust gas purification catalyst may be disposed on the upstream or downstream side of the catalyst 1A. Examples of the other exhaust gas purification catalyst include an exhaust gas purification catalyst 1B and an exhaust gas purification catalyst 1C, which are described below.

As shown in Figures 2 to 4, the catalyst 1A includes a substrate 10, a first catalyst layer 20 provided on the substrate 10, and a second catalyst layer 30 provided on the substrate 10.

The second catalyst layer 30 is a layer optionally provided. Thus, the present invention also encompasses an embodiment wherein the second catalyst layer 30 is omitted from the catalyst 1A. However, from the viewpoint of improving the exhaust gas purification performance, it is preferable that the second catalyst layer 30 is provided.

The material constituting the substrate 10 can be appropriately selected from known materials. Examples of the material constituting the substrate 10 include a ceramic material, a metal material, and the like. The ceramic material is preferable. Examples of the ceramic material include carbide ceramics such as silicon carbide, titanium carbide, tantalum carbide and tungsten carbide, nitride ceramics such as aluminum nitride, silicon nitride, boron nitride and titanium nitride, oxide ceramics such as alumina, zirconia, cordierite, mullite, zircon, aluminum titanate and magnesium titanate, and the like. Examples of the metal material include alloys such as stainless steel.

As shown in Figures 2 to 4, the substrate 10 includes a tubular member 11, a partition wall 12 provided in the tubular member 11, and cells 13 separated from one another by the partition wall 12. The substrate 10 preferably has a honeycomb structure.

As shown in Figure 2, the tubular member 11 defines the external shape of the substrate 10, and the axial direction of the tubular member 11 coincides with the axial direction of the substrate 10. As shown in Figure 2, the tubular member 11 has a hollow cylindrical shape, but may have another shape, such as a hollow elliptic cylindrical shape or a polygonal tubular shape.

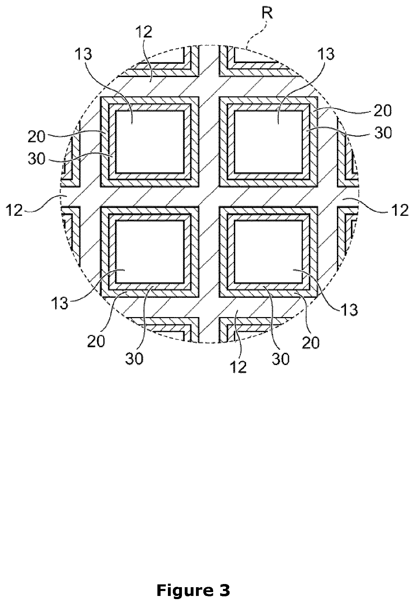

As shown in Figures 2 and 3, the partition wall 12 is provided in the tubular member 11. As shown in Figures 2 to 4, the partition wall 12 is present between adjacent cells 13, whereby the adjacent cells 13 are separated from each other by the partition wall 12. The partition wall 12 may have a porous structure allowing exhaust gas to pass through. The thickness of the partition wall 12 is, for example, 20 µm or more and 1500 µm or less.

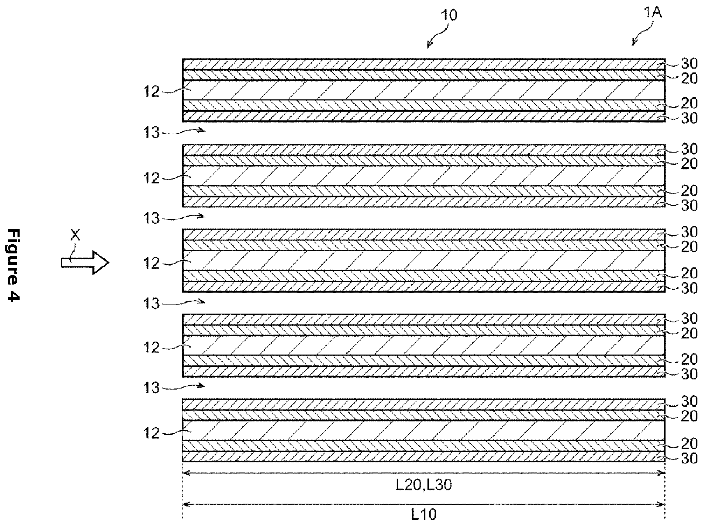

As shown in Figure 4, each cell 13 extends in the exhaust gas flow direction X, and has an end on the exhaust gas inflow side and an end on the exhaust gas outflow side.

As shown in Figure 4, the end on the exhaust gas inflow side and the end on the exhaust gas outflow side of each cell 13 are both open. Therefore, the exhaust gas that has flowed in from the end (opening) on the exhaust gas inflow side of each cell 13 flows out from the end (opening) on the exhaust gas outflow side of each cell 13. Such a mode is called a flow-through type.

As shown in Figures 2 and 3, the shape in a plan view of the end (opening) on the exhaust gas inflow side of each cell 13 is rectangle, but may be another shape, such as hexagon or octagon. This description is also applied to the shape in a plan view of the end (opening) on the exhaust gas outflow side of each cell 13.

The cell density per square inch of the substrate 10 is, for example, 100 cells or more and 1200 cells or less. The cell density per square inch of the substrate 10 means the total number of cells 13 per square inch in a cross-section obtained by cutting the substrate 10 by a plane perpendicular to the exhaust gas flow direction X.

The volume of the substrate 10 is, for example, 0.1 L or more and 20 L or less. The volume of the substrate 10 means the apparent volume of the substrate 10. In the case where the substrate 10 is in the form of a cylinder, the outer diameter of the substrate 10 is 2r, and the length of the substrate 10 is L10, the volume of the substrate 10 is represented by the formula: Volume of substrate 10 = π × r² × L10.

As shown in Figure 4, the first catalyst layer 20 is provided on a surface of the partition wall 12 of the substrate 10. The surface of the partition wall 12 means an outer surface of the partition wall 12, the outer surface extending in the exhaust gas flow direction X. The first catalyst layer 20 may be provided directly or via another layer on the surface of the partition wall 12.

As shown in Figure 4, the first catalyst layer 20 has a structure rising from the surface of the partition wall 12 toward the cell 13 side (hereinafter referred to as a "rising structure"). The first catalyst layer 20 may be composed only of the rising structure, or may have a structure present inside the partition wall 12 (hereinafter referred to as an "internal structure") in addition to the rising structure. Alternatively, the first catalyst layer 20 may be composed only of the internal structure. The expression "the first catalyst layer 20 provided on the substrate 10" encompasses an embodiment wherein the first catalyst layer 20 is composed only of the rising structure, an embodiment wherein the first catalyst layer 20 is composed only of the internal structure, and an embodiment wherein the first catalyst layer 20 has both the rising structure and the internal structure.

As shown in Figure 4, the first catalyst layer 20 extends from the end on the exhaust gas inflow side of the partition wall 12 to the end on the exhaust gas outflow side of the partition wall 12 along the exhaust gas flow direction X. The first catalyst layer 20 may extend from the end on the exhaust gas inflow side of the partition wall 12 along the exhaust gas flow direction X so as not to reach the end on the exhaust gas outflow side of the partition wall 12, or may extend from the end on the exhaust gas outflow side of the partition wall 12 along the direction opposite to the exhaust gas flow direction X so as not to reach the end on the exhaust gas inflow side of the partition wall 12.

The first catalyst layer 20 is composed of the catalyst composition of the present invention. Thus, the above descriptions with respect to the catalyst composition of the present invention are also applied to the first catalyst layer 20. Upon application, "the catalyst composition of the present invention" is replaced with "the first catalyst layer 20".

From the viewpoint of balancing the exhaust gas purification performance and the cost, the mass (mass after calcination) of the first catalyst layer 20 per unit volume of the portion of the substrate 10 provided with the first catalyst layer 20 is preferably 50 g/L or more and 230 g/L or less, more preferably 100 g/L or more and 180 g/L or less, and still more preferably 130 g/L or more and 160 g/L or less.

The mass of the first catalyst layer 20 per unit volume of the portion of the substrate 10 provided with the first catalyst layer 20 is calculated from the formula: (Mass of first catalyst layer 20) / ((Volume of substrate 10) × (Average length L20 of first catalyst layer 20 / Length L10 of substrate 10)). In the present specification, the term "length" means the dimension in the axial direction of the substrate 10, unless otherwise defined.

The above descriptions with respect to "the mass of the catalyst composition" are also applied to "the mass of the first catalyst layer 20". Upon application, "the catalyst composition" is replaced with "the first catalyst layer 20". In the case where the information (e.g., composition and amounts) of raw materials used for producing the first catalyst layer 20 is known, the mass of the first catalyst layer 20 can be determined from the information of raw materials used for producing the first catalyst layer 20.

One example of the method of measuring the average length L20 of the first catalyst layer 20 is as follows:

A sample extending in the axial direction of the substrate 10 and having the same length as the length L10 of the substrate 10 is cut out from the catalyst 1A. The sample is, for example, in the form of a cylinder having a diameter of 25.4 mm. The value of the diameter of the sample can be changed as necessary. The sample is cut at 5 mm intervals in planes perpendicular to the axial direction of the substrate 10 to obtain cut pieces, which are referred to as the first cut piece, the second cut piece and so on up to the n-th cut piece, sequentially from the side of the end on the exhaust gas inflow side of the sample. The length of each cut piece is 5 mm. The composition of each cut piece is analyzed using an X-ray fluorescence analyzer (XRF) (e.g., an energy dispersive X-ray analyzer (EDX), a wavelength dispersive X-ray analyzer (WDX) or the like), an inductively coupled plasma emission spectrophotometer (ICP-AES), SEM-EDX or the like, and it is confirmed whether or not each cut piece includes part of the first catalyst layer 20, based on the composition of each cut piece.

The compositional analysis is not necessarily performed for a cut piece that apparently includes part of the first catalyst layer 20. For example, it is possible to confirm whether or not each cut piece includes part of the first catalyst layer 20, by observing the cross section thereof using a scanning electron microscope (SEM), an electron probe microanalyzer (EPMA) or the like. At the time of observing the cross section, element mapping of the cross section may be performed.

After confirming whether or not each cut piece includes part of the first catalyst layer 20, the length of the first catalyst layer 20 included in the sample is calculated based on the following formula: Length of catalyst layer 20 included in sample = 5 mm × (Number of cut pieces each including part of catalyst layer 20)

For example, in a case where each of the first cut piece to the k-th cut piece includes part of the first catalyst layer 20, whereas each of the (k + 1)-th to the n-th cut pieces does not include part of the first catalyst layer 20, the length of the first catalyst layer 20 included in the sample is (5 × k) mm.

One example of more specifically measuring the length of the first catalyst layer 20 included in the sample is as follows:
The k-th cut piece (namely, the cut piece closest to the exhaust gas outflow side, among the cut pieces each including part of the first catalyst layer 20) is cut in the axial direction of the substrate 10, and part of the first catalyst layer 20 existing in the resulting cross section is observed using SEM, EPMA or the like, to measure the length of part of the first catalyst layer 20 included in the k-th cut piece. Thereafter, the length of the first catalyst layer 20 included in the sample is calculated based on the following formula: Length of catalyst layer 20 included in sample = (5 mm × (k-1)) + (Length of part of catalyst layer 20 included in k-th cut piece)

The length of the first catalyst layer 20 included in the sample is calculated for 8 to 16 samples arbitrarily cut out from the catalyst 1A, and the average value of the measured lengths is defined as the average length L20 of the first catalyst layer 20.

As shown in Figure 4, the second catalyst layer 30 is provided on the upside of the first catalyst layer 20. The expression that "the second catalyst layer 30 is provided on the upside of the first catalyst layer 20" means that part or the whole of the second catalyst layer 30 is present on, of the two main surfaces of the first catalyst layer 20, the main surface opposite to the main surface on the partition wall 12 side of the substrate 10. The expression "the main surface of the first catalyst layer 20" means an outer surface of the first catalyst layer 20, the outer surface extending in the exhaust gas flow direction X. The second catalyst layer 30 may be provided directly or via another layer on the main surface of the first catalyst layer 20. The second catalyst layer 30 may be provided so that the second catalyst layer 30 covers part or the whole of the main surface of the first catalyst layer 20. The expression "the second catalyst layer 30 provided on the substrate 10" encompasses both an embodiment wherein the second catalyst layer 30 is provided directly on the main surface of the first catalyst layer 20, and an embodiment wherein the second catalyst layer 30 is provided via another layer on the main surface of the first catalyst layer 20.

From the viewpoint of balancing the exhaust gas purification performance and the cost, the mass (mass after calcination) of the second catalyst layer 30 per unit volume of the portion of the substrate 10 provided with the second catalyst layer 30 is preferably 20 g/L or more and 150 g/L or less, more preferably 50 g/L or more and 120 g/L or less, and still more preferably 70 g/L or more and 100 g/L or less.

The mass of the second catalyst layer 30 per unit volume of the portion of the substrate 10 provided with the second catalyst layer 30 is calculated from the formula: (Mass of second catalyst layer 30) / ((Volume of substrate 10) × (Average length L30 of second catalyst layer 30 / Length L10 of substrate 10)).

The above descriptions with respect to "the mass of the catalyst composition" are also applied to "the mass of the second catalyst layer 30". Upon application, "the catalyst composition" is replaced with "the second catalyst layer 30". In the case where the information (e.g., composition and amounts) of raw materials used for producing the second catalyst layer 30 is known, the mass of the second catalyst layer 30 can be determined from the information of raw materials used for producing the second catalyst layer 30.

The above descriptions with respect to the method for measuring the average length L20 of the first catalyst layer 20 are also applied to the method for measuring the average length L30 of the second catalyst layer 30. Upon application, "the first catalyst layer 20" and "the average length L20" are replaced with "the second catalyst layer 30" and "the average length L30", respectively.

From the viewpoint of improving the NOx purification performance, it is preferable that the second catalyst layer 30 contains Rh. Rh contained in the second catalyst layer 30 is in the form capable of functioning as a catalytically active component, for example, in the form of a catalytically active component containing Rh, such as metal Rh, an alloy containing Rh, a compound containing Rh (e.g., an oxide of Rh), or the like. From the viewpoint of improving the exhaust gas purification performance, it is preferable that the catalytically active component containing Rh is in the form of a particle.

From the viewpoint of balancing the exhaust gas purification performance and the cost, the content of Rh in terms of metal in the second catalyst layer 30 is preferably 0.010% by mass or more and 1.0% by mass or less, more preferably 0.050% by mass or more and 0.50% by mass or less, and still more preferably 0.10% by mass or more and 0.30% by mass or less, based on the mass of the second catalyst layer 30. The content of Rh in terms of metal in the second catalyst layer 30 can be determined in the same manner as the content of Pt in terms of metal in the catalyst composition of the present invention.

The second catalyst layer 30 may contain a noble metal element other than Rh. Examples of the noble metal element other than Rh include Au, Ag, Pt, Pd, Ir, Ru, Os, and the like. The noble metal element other than Rh contained in the second catalyst layer 30 is in the form capable of functioning as a catalytically active component, for example, in the form of a catalytically active component containing the noble metal element other than Rh, such as metal, an alloy containing the noble metal element, a compound containing the noble metal element (e.g., an oxide of the noble metal element), or the like. From the viewpoint of improving the exhaust gas purification performance, it is preferable that the catalytically active component containing the noble metal element other than Rh is in the form of a particle.

In the case where the second catalyst layer 30 contains Rh and the noble metal element other than Rh, Rh and the noble metal element other than Rh may form an alloy, thereby decreasing the active sites of Rh participating in exhaust gas purification. Accordingly, it is preferable that the second catalyst layer 30 is substantially free from the noble metal element other than Rh.

In the present specification, the expression that "a catalyst layer is substantially free from a noble metal element other than Rh" means that the content of the noble metal element other than Rh in terms of metal in the catalyst layer is preferably 0.050% by mass or less, and more preferably 0.010% by mass or less, based on the mass of the catalyst layer. The lower limit is zero. In the present specification, the expression "the content of a noble metal element other than Rh in terms of metal in a catalyst layer" means, in the case where the catalyst layer contains one noble metal element other than Rh, the content of the one noble metal element other than Rh in terms of metal, and means, in the case where the catalyst layer contains two or more noble metal elements other than Rh, the total content of the two or more noble metal elements other than Rh in terms of metal. The content of a noble metal element other than Rh in terms of metal in a catalyst layer can be determined in the same manner as the content of Pt in terms of metal in the catalyst composition of the present invention.

The second catalyst layer 30 may contain one or two or more alkaline-earth metal elements. The alkaline-earth metal element is selected from Be, Mg, Ca, Sr, Ba and Ra.

From the viewpoint of suppressing oxidation of Rh, the content of the alkaline-earth metal element in terms of metal in the second catalyst layer 30 is preferably 5.0% by mass or less, more preferably 3.0% by mass or less, and still more preferably 1.0% by mass or less, based on the mass of the second catalyst layer 30. The lower limit is zero.

In the present specification, the expression "the content of an alkaline-earth metal element in terms of metal in a catalyst layer" means, in the case where the catalyst layer contains one alkaline-earth metal element, the content of the one alkaline-earth metal element in terms of metal, and means, in the case where the catalyst layer contains two or more alkaline-earth metal elements, the total content of the two or more alkaline-earth metal elements in terms of metal. The content of an alkaline-earth metal element in terms of metal in a catalyst layer can be determined in the same manner as the content of Pt in terms of metal in the catalyst composition of the present invention.

In the second catalyst layer 30, the form in which the alkaline-earth metal element is present is not particularly limited. In the second catalyst layer 30, the alkaline-earth metal element can be present in one or two or more forms selected from, for example, an oxide, a carbonate, a nitrate and a sulfate.

The second catalyst layer 30 may contain one or two or more carriers. In the case where the second catalyst layer 30 contains a carrier, it is preferable that at least part of a catalytically active component is supported on the carrier. The descriptions with respect to the carrier (including the descriptions with respect to an inorganic oxide), and the meaning of "supported" and the confirmation method of "supported" are the same as described above.

In the catalyst 1A, the second catalyst layer 30 is provided on the upside of the first catalyst layer 20. Thus, exhaust gas that has flowed in from the end (opening) on the exhaust gas inflow side of the cell 13 contacts with the second catalyst layer 30, and then contacts with the first catalyst layer 20. When the exhaust gas contacts with the second catalyst layer 30, the exhaust gas is purified by a catalytically active component (e.g., Rh) in the second catalyst layer 30. When the environment in which the catalyst 1A is placed is a low temperature environment immediately after start-up of an internal combustion engine, the catalytically active component (e.g., Rh) in the second catalyst layer 30 is not fully activated, and thus the exhaust gas purification performance of the second catalyst layer 30 is low. Therefore, the second catalyst layer 30 may not sufficiently purify NOx. However, NOx that is not purified by the second catalyst layer 30 in the low temperature environment is adsorbed onto Sr in the first catalyst layer 20, maintained on Sr in the first catalyst layer 20 until the environment in which the first catalyst layer 20 is placed becomes a high temperature environment, and released after the environment in which the first catalyst layer 20 is placed becomes a high temperature environment (i.e., after a catalytically active component (e.g., Pt) in the first catalyst layer 20 and/or a catalytically active component (e.g., Rh) in the second catalyst layer 30 is fully activated). The released NOx is more effectively purified by the activated catalytically active component (the catalytically active component (e.g., Pt) in the first catalyst layer 20 and/or the catalytically active component (e.g., Rh) in the second catalyst layer 30). In this manner, Sr in the first catalyst layer 20 can compensate for the exhaust gas purification performance of the catalyst 1A in the low temperature environment by maintaining NOx adsorbed in the low-temperature environment until the environment becomes a high temperature environment.

When the content of Sr in terms of metal in the first catalyst layer 20 is too small, the effect of Sr is not fully demonstrated. When the content of Sr in terms of metal in the first catalyst layer 20 is too large, the exhaust gas purification performance of Pt in the first catalyst layer 20 in a low temperature environment is decreased. Sr stabilizes oxidized state of Pt and inactivates Pt, which is considered to be associated with the decrease in the exhaust gas purification performance of Pt. When the content of Sr in terms of metal in the first catalyst layer 20 is 0.1% by mass or more and 9.0% by mass or less based on the mass of the first catalyst layer 20, it is possible to more effectively realize both the exhaust gas purification performance in a low temperature environment and the ability to maintain NOx adsorbed in a low-temperature environment until the environment becomes a high temperature environment, while utilizing Pt.

The catalyst 1A can be produced by forming the first catalyst layer 20 on the substrate 10 and then forming the second catalyst layer 30 on the upside of the first catalyst layer 20.

The first catalyst layer 20 can be formed by mixing a Pt supply source (e.g., a Pt salt), a Sr supply source (e.g., a Sr salt) and other component(s) (e.g., an inorganic oxide, a binder, a solvent, and the like) to prepare a first slurry, coating the substrate 10 with the first slurry, drying the resulting material, and calcining the resulting material.

The second catalyst layer 30 can be formed by mixing a Rh supply source (e.g., a Rh salt) and other component(s) (e.g., an inorganic oxide, a binder, a solvent, and the like) to prepare a second slurry, coating the first catalyst layer 20 with the second slurry, drying the resulting material, and calcining the resulting material.

The descriptions with respect to the Pt salt, the Sr salt, the inorganic oxide, the binder and the solvent are the same as described above. Examples of the Rh salt include a nitrate, an ammine complex salt, an acetate, a chloride, and the like. The drying temperature is, for example, 70°C or more and 150°C or less, and the drying time is, for example, 5 minutes or more and 1 hour or less. The calcination temperature is, for example, 200°C or more and 700°C or less, and the calcination time is, for example, 0.5 hours or more and 5 hours or less. The calcination can be carried out, for example, in an air atmosphere.

### <<Second embodiment>>

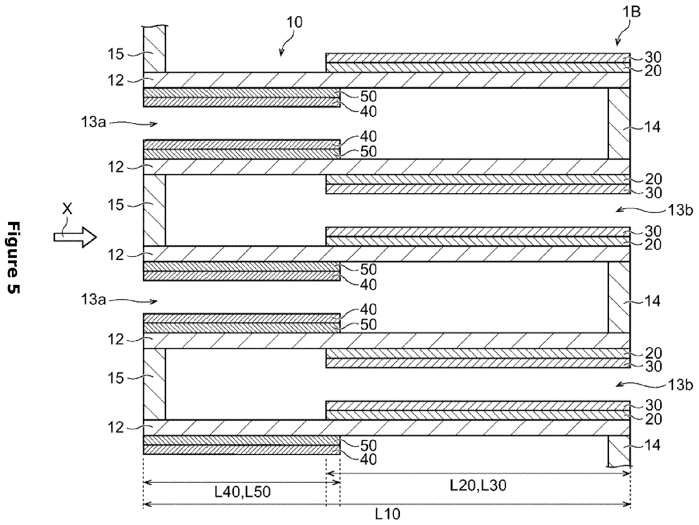

Hereinafter, an exhaust gas purification catalyst 1B (which may be referred to as a "catalyst 1B" in the present specification) according to a second embodiment of the present invention will be described with reference to Figure 5. In the catalyst 1B, the same members as those of the catalyst 1A are denoted by the same reference signs as those of the catalyst 1A. Unless otherwise specified, the above descriptions with respect to the catalyst 1A are also applied to the catalyst 1B.

As shown in Figure 5, the catalyst 1B includes a substrate 10, a first catalyst layer 20 provided on the substrate 10, a second catalyst layer 30 provided on the substrate 10, a third catalyst layer 40 provided on the substrate 10, and a fourth catalyst layer 50 provided on the substrate 10. Unless otherwise specified, the above descriptions with respect to the substrate 10, the first catalyst layer 20 and the second catalyst layer 30 in the first embodiment are also applied to the catalyst 1B.

Each of the second catalyst layer 30, the third catalyst layer 40 and the fourth catalyst layer 50 is a layer optionally provided. Thus, the present invention also encompasses embodiments wherein one or two or more of the second catalyst layer 30, the third catalyst layer 40 and the fourth catalyst layer 50 are omitted from the catalyst 1B (e.g., an embodiment wherein the second catalyst layer 30 is omitted, an embodiment wherein the third catalyst layer 40 is omitted, an embodiment wherein the fourth catalyst layer 50 is omitted, an embodiment wherein the second catalyst layer 30 and the third catalyst layer 40 are omitted, an embodiment wherein the second catalyst layer 30 and the fourth catalyst layer 50 are omitted, and the like). However, from the viewpoint of improving the exhaust gas purification performance in the embodiments wherein one or two or more of the second catalyst layer 30, the third catalyst layer 40 and the fourth catalyst layer 50 are omitted from the catalyst 1B, at least one of the second catalyst layer 30 and the third catalyst layer 40 is preferably provided, and both of the second catalyst layer 30 and the third catalyst layer 40 are more preferably provided.

As shown in Figure 5, the catalyst 1B differs from the catalyst 1A in that:
the substrate 10 is provided with a first sealing member 14 that seals the ends of some of the cells 13 on the exhaust gas outflow side and a second sealing member 15 that seals the ends of the remaining cells 13 on the exhaust gas inflow side, so that some of the cells 13 are each an inflow-side cell 13a in which the end on the exhaust gas inflow side is open and the end on the exhaust gas outflow side is closed by the first sealing member 14, and the remaining cells 13 are each an outflow-side cell 13b in which the end on the exhaust gas inflow side is closed by the second sealing member 15 and the end on the exhaust gas outflow side is open; and
the first catalyst layer 20 and the second catalyst layer 30 are provided on the outflow-side cell 13b side of the partition wall 12 of the substrate 10, and the third catalyst layer 40 and the fourth catalyst layer 50 are provided on the inflow-side cell 13a side of the partition wall 12 of the substrate 10.

As shown in Figure 5, a plurality of (e.g., four) outflow-side cells 13b are arranged around and adjacent to one inflow-side cell 13a, and the inflow-side cell 13a and the outflow-side cells 13b adjacent to the inflow-side cell 13a are separated from one another by the porous partition wall 12.

As shown in Figure 5, the first catalyst layer 20 extends from the end on the exhaust gas outflow side of the partition wall 12 along the direction opposite to the exhaust gas flow direction X so as not to reach the end on the exhaust gas inflow side of the partition wall 12. The first catalyst layer 20 may reach the end on the exhaust gas inflow side of the partition wall 12.

As shown in Figure 5, the first catalyst layer 20 has a structure rising from the surface of the partition wall 12 toward the outflow-side cell 13b side (hereinafter referred to as a "rising structure"). The first catalyst layer 20 may be composed only of the rising structure, or may have a structure present inside the partition wall 12 (hereinafter referred to as an "internal structure") in addition to the rising structure. Alternatively, the first catalyst layer 20 may be composed only of the internal structure. The expression "the first catalyst layer 20 provided on the substrate 10" encompasses an embodiment wherein the first catalyst layer 20 is composed only of the rising structure, an embodiment wherein the first catalyst layer 20 is composed only of the internal structure, and an embodiment wherein the first catalyst layer 20 has both the rising structure and the internal structure.

From the viewpoint of balancing the exhaust gas purification performance and the cost, the mass (mass after calcination) of the first catalyst layer 20 per unit volume of the portion of the substrate 10 provided with the first catalyst layer 20 is preferably 5 g/L or more and 60 g/L or less, more preferably 10 g/L or more and 40 g/L or less, and still more preferably 10 g/L or more and 30 g/L or less.

The mass of the first catalyst layer 20 per unit volume of the portion of the substrate 10 provided with the first catalyst layer 20 can be determined in the same manner as in the first embodiment.

The method of measuring the average length L20 of the first catalyst layer 20 in the second embodiment is the same as in the first embodiment, except that in the method of measuring the average length L20 of the first catalyst layer 20 in the second embodiment, a sample is cut at 5 mm intervals in planes perpendicular to the axial direction of the substrate 10 to obtain cut pieces, which are referred to as the first cut piece, the second cut piece and so on up to the n-th cut piece, sequentially from the side of the end on the exhaust gas outflow side of the sample.

The average length L20 of the first catalyst layer 20 can be appropriately adjusted in consideration of, for example, the exhaust gas purification performance and the PM collection performance. From the viewpoint of improving the exhaust gas purification performance and the PM collection performance, the percentage of the average length L20 of the first catalyst layer 20 to the length L10 of the substrate 10 (L20 / L10 × 100) is preferably 15% or more and 90% or less, more preferably 20% or more and 80% or less, and still more preferably 30% or more and 80% or less.

As shown in Figure 5, the second catalyst layer 30 is provided on the upside of the first catalyst layer 20, and extends from the end on the exhaust gas outflow side of the partition wall 12 along the direction opposite to the exhaust gas flow direction X so as not to reach the end on the exhaust gas inflow side of the partition wall 12. The second catalyst layer 20 may reach the end on the exhaust gas inflow side of the partition wall 12. The meanings of the expression that "the second catalyst layer 30 is provided on the upside of the first catalyst layer 20" and the expression "the main surface of the first catalyst layer 20" are the same as defined above. The second catalyst layer 30 may be provided directly or via another layer on the main surface of the first catalyst layer 20. The second catalyst layer 30 may be provided so that the second catalyst layer 30 covers part or the whole of the main surface of the first catalyst layer 20. The expression "the second catalyst layer 30 provided on the substrate 10" encompasses both an embodiment wherein the second catalyst layer 30 is provided directly on the main surface of the first catalyst layer 20, and an embodiment wherein the second catalyst layer 30 is provided via another layer on the main surface of the first catalyst layer 20.

From the viewpoint of balancing the exhaust gas purification performance and the cost, the mass (mass after calcination) of the second catalyst layer 30 per unit volume of the portion of the substrate 10 provided with the second catalyst layer 30 is preferably 5 g/L or more and 60 g/L or less, more preferably 10 g/L or more and 40 g/L or less, and still more preferably 10 g/L or more and 30 g/L or less.

The mass of the second catalyst layer 30 per unit volume of the portion of the substrate 10 provided with the second catalyst layer 30 can be determined in the same manner as in the first embodiment.

The method of measuring the average length L30 of the second catalyst layer 30 in the second embodiment is the same as in the first embodiment, except that in the method of measuring the average length L30 of the second catalyst layer 30 in the second embodiment, a sample is cut at 5 mm intervals in planes perpendicular to the axial direction of the substrate 10 to obtain cut pieces, which are referred to as the first cut piece, the second cut piece and so on up to the n-th cut piece, sequentially from the side of the end on the exhaust gas outflow side of the sample.

The average length L30 of the second catalyst layer 30 can be appropriately adjusted in consideration of, for example, the exhaust gas purification performance and the PM collection performance. From the viewpoint of improving the exhaust gas purification performance and the PM collection performance, the percentage of the average length L30 of the second catalyst layer 30 to the length L10 of the substrate 10 (L30 / L10 × 100) is preferably 15% or more and 90% or less, more preferably 20% or more and 80% or less, and still more preferably 30% or more and 80% or less.

As shown in Figure 5, the third catalyst layer 40 is provided on the upside of the fourth catalyst layer 50. The expression that "the third catalyst layer 40 is provided on the upside of the fourth catalyst layer 50" means that part or the whole of the third catalyst layer 40 is present on, of the two main surfaces of the fourth catalyst layer 50, the main surface opposite to the main surface on the partition wall 12 side of the substrate 10. The expression "the main surface of the fourth catalyst layer 50" means an outer surface of the fourth catalyst layer 50, the outer surface extending in the exhaust gas flow direction X. The third catalyst layer 40 may be provided directly or via another layer on the main surface of the fourth catalyst layer 50. The third catalyst layer 40 may be provided so that the third catalyst layer 40 covers part or the whole of the main surface of the fourth catalyst layer 50. The expression "the third catalyst layer 40 provided on the substrate 10" encompasses both an embodiment wherein the third catalyst layer 40 is provided directly on the main surface of the fourth catalyst layer 50, and an embodiment wherein the third catalyst layer 40 is provided via another layer on the main surface of the fourth catalyst layer 50.

As shown in Figure 5, the third catalyst layer 40 extends from the end on the exhaust gas inflow side of the partition wall 12 along the exhaust gas flow direction X so as not to reach the end on the exhaust gas outflow side of the partition wall 12. The third catalyst layer 40 may reach the end on the exhaust gas outflow side of the partition wall 12.

As shown in Figure 5, the third catalyst layer 40 is provided on the upstream side of the first catalyst layer 20. The expression that "the third catalyst layer 40 is provided on the upstream side of the first catalyst layer 20" means that part or the whole of the third catalyst layer 40 is present in, of the partition wall 12 of the substrate 10, a region located on the upstream side of a region in which the first catalyst layer 20 is provided, in the exhaust gas flow direction X.

From the viewpoint of balancing the exhaust gas purification performance and the cost, the mass (mass after calcination) of the third catalyst layer 40 per unit volume of the portion of the substrate 10 provided with the third catalyst layer 40 is preferably 5 g/L or more and 60 g/L or less, more preferably 10 g/L or more and 40 g/L or less, and still more preferably 10 g/L or more and 30 g/L or less.

The mass of the third catalyst layer 40 per unit volume of the portion of the substrate 10 provided with the third catalyst layer 40 is calculated from the formula: (Mass of third catalyst layer 40) / ((Volume of substrate 10) × (Average length L40 of third catalyst layer 40 / Length L10 of substrate 10)).

The above descriptions with respect to "the mass of the catalyst composition" are also applied to "the mass of the third catalyst layer 40". Upon application, "the catalyst composition" is replaced with "the third catalyst layer 40". In the case where the information (e.g., composition and amounts) of raw materials used for producing the third catalyst layer 40 is known, the mass of the third catalyst layer 40 can be determined from the information of raw materials used for producing the third catalyst layer 40.

The above descriptions with respect to the method for measuring the average length L20 of the first catalyst layer 20 in the first embodiment are also applied to the method for measuring the average length L40 of the third catalyst layer 40. Upon application, "the first catalyst layer 20" and "the average length L20" are replaced with "the third catalyst layer 40" and "the average length L40", respectively.

The average length L40 of the third catalyst layer 40 can be appropriately adjusted in consideration of, for example, the exhaust gas purification performance and the PM collection performance. From the viewpoint of improving the exhaust gas purification performance and the PM collection performance, the percentage of the average length L40 of the third catalyst layer 40 to the length L10 of the substrate 10 (L40 / L10 × 100) is preferably 15% or more and 90% or less, more preferably 20% or more and 80% or less, and still more preferably 30% or more and 80% or less.

From the viewpoint of improving the exhaust gas purification performance and the PM collection performance, the percentage of the total of the average length L20 of the first catalyst layer 20 or the average length L30 of the second catalyst layer 30 and the average length L40 of the third catalyst layer 40 to the length L10 of the substrate 10 (((L20 or L30) + L40) / L10 × 100) is preferably 100% or more and 180% or less, more preferably 105% or more and 150% or less, and still more preferably 110% or more and 130% or less.

From the viewpoint of improving the NOx purification performance, it is preferable that the third catalyst layer 40 contains Rh. Rh contained in the third catalyst layer 40 is in the form capable of functioning as a catalytically active component, for example, in the form of a catalytically active component containing Rh, such as metal Rh, an alloy containing Rh, a compound containing Rh (e.g., an oxide of Rh), or the like. From the viewpoint of improving the exhaust gas purification performance, it is preferable that the catalytically active component containing Rh is in the form of a particle.

From the viewpoint of balancing the exhaust gas purification performance and the cost, the content of Rh in terms of metal in the third catalyst layer 40 is preferably 0.050% by mass or more and 2.0% by mass or less, more preferably 0.10% by mass or more and 1.5% by mass or less, and still more preferably 0.20% by mass or more and 1.0% by mass or less, based on the mass of the third catalyst layer 40. The content of Rh in terms of metal in the third catalyst layer 40 can be determined in the same manner as the content of Pt in terms of metal in the catalyst composition of the present invention.

The third catalyst layer 40 may contain a noble metal element other than Rh. Examples of the noble metal element other than Rh include Au, Ag, Pt, Pd, Ir, Ru, Os, and the like. The noble metal element other than Rh contained in the third catalyst layer 40 is in the form capable of functioning as a catalytically active component, for example, in the form of a catalytically active component containing the noble metal element other than Rh, such as metal, an alloy containing the noble metal element, a compound containing the noble metal element (e.g., an oxide of the noble metal element), or the like. From the viewpoint of improving the exhaust gas purification performance, it is preferable that the catalytically active component containing the noble metal element other than Rh is in the form of a particle.

In the case where the third catalyst layer 40 contains Rh and the noble metal element other than Rh, Rh and the noble metal element other than Rh may form an alloy, thereby decreasing the active sites of Rh participating in exhaust gas purification. Accordingly, it is preferable that the third catalyst layer 40 is substantially free from the noble metal element other than Rh. The meanings of the expression "substantially free from the noble metal element other than Rh" and the expression "the content of the noble metal element other than Rh in terms of metal", and the method for determining the content of the noble metal element other than Rh are the same as described above.

The third catalyst layer 40 may contain one or two or more alkaline-earth metal elements. The alkaline-earth metal element is selected from Be, Mg, Ca, Sr, Ba and Ra.

From the viewpoint of suppressing oxidation of Rh, the content of the alkaline-earth metal element in terms of metal in the third catalyst layer 40 is preferably 5.0% by mass or less, more preferably 3.0% by mass or less, and still more preferably 1.0% by mass or less, based on the mass of the third catalyst layer 40. The lower limit is zero. The meaning of the expression "the content of the alkaline-earth metal element in terms of metal", and the method for determining the content of the alkaline-earth metal element are the same as described above.

In the third catalyst layer 40, the form in which the alkaline-earth metal element is present is not particularly limited. In the third catalyst layer 40, the alkaline-earth metal element can be present in one or two or more forms selected from, for example, an oxide, a carbonate, a nitrate and a sulfate.

The third catalyst layer 40 may contain one or two or more carriers. In the case where the third catalyst layer 40 contains a carrier, it is preferable that at least part of a catalytically active component is supported on the carrier. The descriptions with respect to the carrier (including the descriptions with respect to an inorganic oxide), the meaning of "supported" and the confirmation method of "supported" are the same as described above.

As shown in Figure 5, the fourth catalyst layer 50 is provided on a surface of the partition wall 12 of the substrate 10. The surface of the partition wall 12 means an outer surface of the partition wall 12, the outer surface extending in the exhaust gas flow direction X. The fourth catalyst layer 50 may be provided directly or via another layer on the surface of the partition wall 12.

As shown in Figure 5, the fourth catalyst layer 50 has a structure rising from the surface of the partition wall 12 toward the inflow-side cell 13a side (hereinafter referred to as a "rising structure"). The fourth catalyst layer 50 may be composed only of the rising structure, or may have a structure present inside the partition wall 12 (hereinafter referred to as an "internal structure") in addition to the rising structure. Alternatively, the fourth catalyst layer 50 may be composed only of the internal structure. The expression "the fourth catalyst layer 50 provided on the substrate 10" encompasses an embodiment wherein the fourth catalyst layer 50 is composed only of the rising structure, an embodiment wherein the fourth catalyst layer 50 is composed only of the internal structure, and an embodiment wherein the fourth catalyst layer 50 has both the rising structure and the internal structure.

As shown in Figure 5, the fourth catalyst layer 50 extends from the end on the exhaust gas inflow side of the partition wall 12 along the exhaust gas flow direction X so as not to reach the end on the exhaust gas outflow side of the partition wall 12. The fourth catalyst layer 50 may reach the end on the exhaust gas outflow side of the partition wall 12.

As shown in Figure 5, the fourth catalyst layer 50 is provided on the upstream side of the first catalyst layer 20. The expression that "the fourth catalyst layer 50 is provided on the upstream side of the first catalyst layer 20" means that part or the whole of the fourth catalyst layer 50 is present in, of the partition wall 12 of the substrate 10, a region located on the upstream side of a region in which the first catalyst layer 20 is provided, in the exhaust gas flow direction X.

From the viewpoint of balancing the exhaust gas purification performance and the cost, the mass (mass after calcination) of the fourth catalyst layer 50 per unit volume of the portion of the substrate 10 provided with the fourth catalyst layer 50 is preferably 5 g/L or more and 60 g/L or less, more preferably 10 g/L or more and 40 g/L or less, and still more preferably 10 g/L or more and 30 g/L or less.

The mass of the fourth catalyst layer 50 per unit volume of the portion of the substrate 10 provided with the fourth catalyst layer 50 is calculated from the formula: (Mass of fourth catalyst layer 50) / ((Volume of substrate 10) × (Average length L50 of fourth catalyst layer 50 / Length L10 of substrate 10)).

The above descriptions with respect to "the mass of the catalyst composition" are also applied to "the mass of the fourth catalyst layer 50". Upon application, "the catalyst composition" is replaced with "the fourth catalyst layer 50". In the case where the information (e.g., composition and amounts) of raw materials used for producing the fourth catalyst layer 50 is known, the mass of the fourth catalyst layer 50 can be determined from the information of raw materials used for producing the fourth catalyst layer 50.

The above descriptions with respect to the method for measuring the average length L20 of the first catalyst layer 20 in the first embodiment are also applied to the method for measuring the average length L50 of the fourth catalyst layer 50. Upon application, "the first catalyst layer 20" and "the average length L20" are replaced with "the fourth catalyst layer 50" and "the average length L50", respectively.

The average length L50 of the fourth catalyst layer 50 can be appropriately adjusted in consideration of, for example, the exhaust gas purification performance and the PM collection performance. From the viewpoint of improving the exhaust gas purification performance and the PM collection performance, the percentage of the average length L50 of the fourth catalyst layer 50 to the length L10 of the substrate 10 (L50 / L10 × 100) is preferably 15% or more and 90% or less, more preferably 20% or more and 80% or less, and still more preferably 30% or more and 80% or less.

From the viewpoint of improving the exhaust gas purification performance and the PM collection performance, the percentage of the total of the average length L20 of the first catalyst layer 20 or the average length L30 of the second catalyst layer 30 and the average length L50 of the fourth catalyst layer 50 to the length L10 of the substrate 10 (((L20 or L30) + L50) / L10 × 100) is preferably 100% or more and 180% or less, more preferably 105% or more and 150% or less, and still more preferably 110% or more and 130% or less.

From the viewpoint of improving the exhaust gas purification performance, it is preferable that the fourth catalyst layer 50 contains Pd. Pd contained in the fourth catalyst layer 50 is in the form capable of functioning as a catalytically active component, for example, in the form of a catalytically active component containing Pd, such as metal Pd, an alloy containing Pd, a compound containing Pd (e.g., an oxide of Pd), or the like. From the viewpoint of improving the exhaust gas purification performance, it is preferable that the catalytically active component containing Pd is in the form of a particle.

From the viewpoint of balancing the exhaust gas purification performance and the cost, the content of Pd in terms of metal in the fourth catalyst layer 50 is preferably 0.50% by mass or more and 10% by mass or less, more preferably 1.0% by mass or more and 7.0% by mass or less, and still more preferably 2.0% by mass or more and 5.0% by mass or less, based on the mass of the fourth catalyst layer 50. The content of Pd in terms of metal in the fourth catalyst layer 50 can be determined in the same manner as the content of Pt in terms of metal in the catalyst composition of the present invention.

The fourth catalyst layer 50 may contain a noble metal element other than Pd. Examples of the noble metal element other than Pd include Au, Ag, Rh, Pt, Ir, Ru, Os, and the like. The noble metal element other than Pd contained in the fourth catalyst layer 50 is in the form capable of functioning as a catalytically active component, for example, in the form of a catalytically active component containing the noble metal element other than Pd, such as metal, an alloy containing the noble metal element, a compound containing the noble metal element (e.g., an oxide of the noble metal element), or the like. From the viewpoint of improving the exhaust gas purification performance, it is preferable that the catalytically active component containing the noble metal element other than Pd is in the form of a particle.

In the case where the fourth catalyst layer 50 contains Pd and the noble metal element other than Pd, Pd and the noble metal element other than Pd may form an alloy, thereby decreasing the active sites of Pd participating in exhaust gas purification. Accordingly, it is preferable that the fourth catalyst layer 50 is substantially free from the noble metal element other than Pd.

In the present specification, the expression that "a catalyst layer is substantially free from a noble metal element other than Pd" means that the content of the noble metal element other than Pd in terms of metal in the catalyst layer is preferably 0.050% by mass or less, and more preferably 0.010% by mass or less, based on the mass of the catalyst layer. The lower limit is zero. In the present specification, the expression "the content of a noble metal element other than Pd in terms of metal in a catalyst layer" means, in the case where the catalyst layer contains one noble metal element other than Pd, the content of the one noble metal element other than Pd in terms of metal, and means, in the case where the catalyst layer contains two or more noble metal elements other than Pd, the total content of the two or more noble metal elements other than Pd in terms of metal. The content of a noble metal element other than Pd in terms of metal in a catalyst layer can be determined in the same manner as the content of Pt in terms of metal in the catalyst composition of the present invention.

The fourth catalyst layer 50 may contain one or two or more alkaline-earth metal elements. The alkaline-earth metal element is selected from Be, Mg, Ca, Sr, Ba and Ra.

From the viewpoint of maintaining oxidized state of Pd, the content of the alkaline-earth metal element in terms of metal in the fourth catalyst layer 50 is preferably 1.0% by mass or more and 10.0% by mass or less, more preferably 2.0% by mass or more and 6.0% by mass or less, and still more preferably 3.0% by mass or more and 4.0% by mass or less, based on the mass of the fourth catalyst layer 50. The meaning of the expression "the content of the alkaline-earth metal element in terms of metal", and the method for determining the content of the alkaline-earth metal element are the same as described above.

In the fourth catalyst layer 50, the form in which the alkaline-earth metal element is present is not particularly limited. In the fourth catalyst layer 50, the alkaline-earth metal element can be present in one or two or more forms selected from, for example, an oxide, a carbonate, a nitrate and a sulfate.

The fourth catalyst layer 50 may contain one or two or more carriers. In the case where the fourth catalyst layer 50 contains a carrier, it is preferable that at least part of a catalytically active component is supported on the carrier. The descriptions with respect to the carrier (including the descriptions with respect to an inorganic oxide), the meaning of "supported" and the confirmation method of "supported" are the same as described above.

In the exhaust gas purification catalyst 1B, exhaust gas that has flowed in through the exhaust gas in-flow side end (opening) of the in-flow cell 13a passes through the porous partition wall 12, and flows out through the exhaust gas out-flow side end (opening) of the out-flow cell 13b. Such a manner is called a wall-flow type.

In the catalyst 1B, when exhaust gas that has flowed in through the exhaust gas in-flow side end (opening) of the in-flow cell 13a passes through the porous partition wall 12, particulate matter (PM) in the exhaust gas is collected in pores of the partition wall 12. Accordingly, the catalyst 1B is useful as a gasoline particulate filter for a gasoline engine or a diesel particulate filter for a diesel engine.

In the catalyst 1B, the third catalyst layer 40 and the fourth catalyst layer 50 are provided on the upstream of the first catalyst layer 20 and the second catalyst layer 30. Thus, exhaust gas that has flowed in from the end (opening) on the exhaust gas inflow side of the in-flow cell 13a contacts with the third catalyst layer 40 and the fourth catalyst layer 50, then passes through the porous partition wall 12, and then contacts with the first catalyst layer 20 and the second catalyst layer 30. When the exhaust gas contacts with the third catalyst layer 40 and the fourth catalyst layer 50, the exhaust gas is purified by a catalytically active component (e.g., Rh) in the third catalyst layer 40 and a catalytically active component (e.g., Pd) in the fourth catalyst layer 50. When the environment in which the catalyst 1B is placed is a low temperature environment immediately after start-up of an internal combustion engine, the catalytically active component (e.g., Rh) in the third catalyst layer 40 and the catalytically active component (e.g., Pd) in the fourth catalyst layer 50 are not fully activated, and thus the exhaust gas purification performances of the third catalyst layer 40 and the fourth catalyst layer 50 are low. Therefore, the third catalyst layer 40 and the fourth catalyst layer 50 may not sufficiently purify NOx. However, NOx that is not purified by the third catalyst layer 40 and the fourth catalyst layer 50 in the low temperature environment is adsorbed onto Sr in the first catalyst layer 20, maintained on Sr in the first catalyst layer 20 until the environment in which the first catalyst layer 20 and the second catalyst layer 30 are placed becomes a high temperature environment, and released after the environment in which the first catalyst layer 20 and the second catalyst layer 30 are placed becomes a high temperature environment (i.e., after a catalytically active component (e.g., Pt) in the first catalyst layer 20 and/or a catalytically active component (e.g., Rh) in the second catalyst layer 30 is fully activated). The released NOx is effectively purified by the activated catalytically active component (the catalytically active component (e.g., Pt) in the first catalyst layer 20 and/or the catalytically active component (e.g., Rh) in the second catalyst layer 30). In this manner, Sr in the first catalyst layer 20 can compensate for the exhaust gas purification performance of the catalyst 1B in the low temperature environment by maintaining NOx adsorbed in the low-temperature environment until the environment becomes a high temperature environment.

When the content of Sr in terms of metal in the first catalyst layer 20 is too small, the effect of Sr is not fully demonstrated. When the content of Sr in terms of metal in the first catalyst layer 20 is too large, the exhaust gas purification performance of Pt in the first catalyst layer 20 in a low temperature environment is decreased. Sr stabilizes oxidized state of Pt and inactivates Pt, which is considered to be associated with the decrease in the exhaust gas purification performance of Pt. When the content of Sr in terms of metal in the first catalyst layer 20 is 0.1% by mass or more and 9.0% by mass or less based on the mass of the first catalyst layer 20, it is possible to more effectively realize both the exhaust gas purification performance in a low temperature environment and the NOx adsorption performance in a high-temperature environment, while utilizing Pt.

The catalyst 1B can be produced by the following method. The production conditions and the like of the catalyst 1B are the same as those of the catalyst 1A.

The first catalyst layer 20 can be formed by coating a portion on the exhaust gas outflow side of the substrate 10 with a slurry for forming the first catalyst layer 20, drying the slurry, and calcining the slurry as necessary. After the formation of the first catalyst layer 20, the second catalyst layer 30 can be formed by coating a portion on the exhaust gas outflow side of the substrate 10 with a slurry for forming the second catalyst layer 30, drying the slurry, and calcining the slurry as necessary.

The fourth catalyst layer 50 can be formed by coating a portion on the exhaust gas inflow side of the substrate 10 with a slurry for forming the fourth catalyst layer 50, drying the slurry, and calcining the slurry as necessary. After the formation of the fourth catalyst layer 50, the third catalyst layer 40 can be formed by coating a portion on the exhaust gas inflow side of the substrate 10 with a slurry for forming the third catalyst layer 40, drying the slurry, and calcining the slurry as necessary.

The third catalyst layer 40 can be prepared by mixing a Rh supply source (e.g., a Rh salt) and other component(s) (e.g., an inorganic oxide, a binder, a solvent, and the like). The descriptions with respect to the Rh salt, the inorganic oxide, the binder and the solvent are the same as described above.

The fourth catalyst layer 50 can be prepared by mixing a Pd supply source (e.g., a Pd salt) and other component(s) (e.g., an inorganic oxide, a binder, a solvent, and the like). Examples of the Pd salt include a nitrate, an ammine complex salt, an acetate, a chloride, and the like. The descriptions with respect to the inorganic oxide, the binder and the solvent are the same as described above.

### <<Third embodiment>>

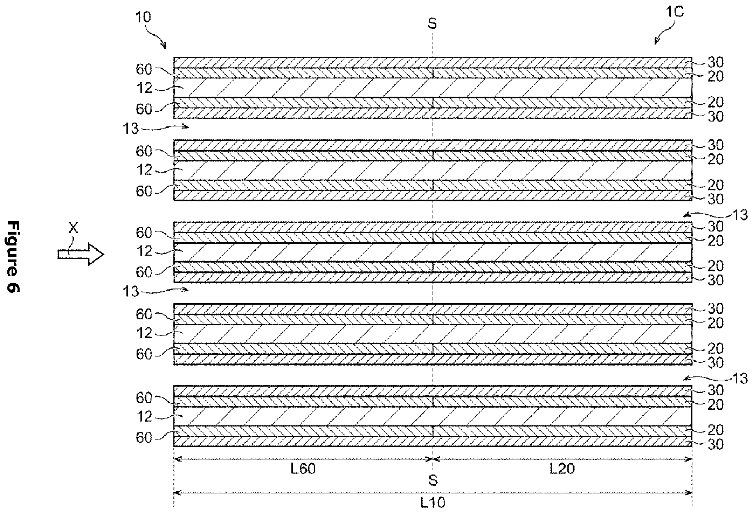

Hereinafter, an exhaust gas purification catalyst 1C (which may be referred to as a "catalyst 1C" in the present specification) according to a third embodiment of the present invention will be described with reference to Figure 6. In the catalyst 1C, the same members as those of the catalyst 1A are denoted by the same reference signs as those of the catalyst 1A. Unless otherwise specified, the above descriptions with respect to the catalyst 1A are also applied to the catalyst 1C.

As shown in Figure 6, the catalyst 1C includes a substrate 10, a first catalyst layer 20 provided on the substrate 10, a second catalyst layer 30 provided on the substrate 10, and a fifth catalyst layer 60 provided on the substrate 10. Unless otherwise specified, the above descriptions with respect to the substrate 10, the first catalyst layer 20 and the second catalyst layer 30 in the first embodiment are also applied to the catalyst 1C.

The second catalyst layer 30 is a layer optionally provided. The present invention also encompasses an embodiment wherein the second catalyst layer 30 is omitted from the catalyst 1C. However, from the viewpoint of improving the exhaust gas purification performance, it is preferable that the second catalyst layer 30 is provided.

As shown in Figure 6, the catalyst 1C differs from the catalyst 1A in that:
the fifth catalyst layer 60 is provided on the upstream side of the first catalyst layer 20; and
the second catalyst layer 30 is provided on the upside of the first catalyst layer 20 and the fifth catalyst layer 60.

In the present embodiment, as shown in Figure 6, a part of the second catalyst layer 30 is provided on the upside of the first catalyst layer 20, and the remaining part of the second catalyst layer 30 is provided on the fifth catalyst layer 60. However, the whole of the second catalyst layer 30 may be provided on the upside of either one of the first catalyst layer 20 and the fifth catalyst layer 60.

As shown in Figure 6, the first catalyst layer 20 extends from the end on the exhaust gas outflow side of the partition wall 12 along the direction opposite to the exhaust gas flow direction X so as not to reach the end on the exhaust gas inflow side of the partition wall 12.

As shown in Figure 6, the fifth catalyst layer 60 is provided on a surface of the partition wall 12 of the substrate 10. The surface of the partition wall 12 means an outer surface of the partition wall 12, the outer surface extending in the exhaust gas flow direction X. The fifth catalyst layer 60 may be provided directly or via another layer on the surface of the partition wall 12.

As shown in Figure 6, the fifth catalyst layer 60 extends from the end on the exhaust gas inflow side of the partition wall 12 along the exhaust gas flow direction X so as not to reach the end on the exhaust gas outflow side of the partition wall 12.

As shown in Figure 6, the fifth catalyst layer 60 has a structure rising from the surface of the partition wall 12 toward the cell 13 side (hereinafter referred to as a "rising structure"). The fifth catalyst layer 60 may be composed only of the rising structure, or may have a structure present inside the partition wall 12 (hereinafter referred to as an "internal structure") in addition to the rising structure. Alternatively, the fifth catalyst layer 60 may be composed only of the internal structure. The expression "the fifth catalyst layer 60 provided on the substrate 10" encompasses an embodiment wherein the fifth catalyst layer 60 is composed only of the rising structure, an embodiment wherein the fifth catalyst layer 60 is composed only of the internal structure, and an embodiment wherein the fifth catalyst layer 60 has both the rising structure and the internal structure.

As shown in Figure 6, the fifth catalyst layer 60 is provided on the upstream side of the first catalyst layer 20. The expression that "the fifth catalyst layer 60 is provided on the upstream side of the first catalyst layer 20" means that part or the whole of the fifth catalyst layer 60 is present in, of the partition wall 12 of the substrate 10, a region located on the upstream side of a region in which the first catalyst layer 20 is provided, in the exhaust gas flow direction X.

As shown in Figure 6, the end on the exhaust gas inflow side of the first catalyst layer 20 and the end on the exhaust gas outflow side of the fifth catalyst layer 60 are in contact with each other at the boundary plane S.

The end on the exhaust gas inflow side of the first catalyst layer 20 may have a portion that overlaps with the end on the exhaust gas outflow side of the fifth catalyst layer 60 (i.e., a portion that is located on the upside of the end on the exhaust gas outflow side of the fifth catalyst layer 60 and covers the end on the exhaust gas outflow side of the fifth catalyst layer 60). Alternatively, the end on the exhaust gas outflow side of the fifth catalyst layer 60 may have a portion that overlaps with the end on the exhaust gas inflow side of the first catalyst layer 20 (i.e., a portion that is located on the upside of the end on the exhaust gas inflow side of the first catalyst layer 20 and covers the end on the exhaust gas inflow side of the first catalyst layer 20). These cases are also included in the expression that "the fifth catalyst layer 60 is provided on the upstream side of the first catalyst layer 20".

From the viewpoint of balancing the exhaust gas purification performance and the cost, the mass (mass after calcination) of the first catalyst layer 20 per unit volume of the portion of the substrate 10 provided with the first catalyst layer 20 is preferably 50 g/L or more and 230 g/L or less, more preferably 100 g/L or more and 180 g/L or less, and still more preferably 130 g/L or more and 160 g/L or less.

The mass of the first catalyst layer 20 per unit volume of the portion of the substrate 10 provided with the first catalyst layer 20 can be determined in the same manner as in the first embodiment.

The method of measuring the average length L20 of the first catalyst layer 20 in the third embodiment is the same as in the first embodiment, except that in the method of measuring the average length L20 of the first catalyst layer 20 in the third embodiment, a sample is cut at 5 mm intervals in planes perpendicular to the axial direction of the substrate 10 to obtain cut pieces, which are referred to as the first cut piece, the second cut piece and so on up to the n-th cut piece, sequentially from the side of the end on the exhaust gas outflow side of the sample.

From the viewpoint of balancing the exhaust gas purification performance and the cost, the mass (mass after calcination) of the fifth catalyst layer 60 per unit volume of the portion of the substrate 10 provided with the fifth catalyst layer 60 is preferably 20 g/L or more and 150 g/L or less, more preferably 50 g/L or more and 120 g/L or less, and still more preferably 70 g/L or more and 100 g/L or less.

The mass of the fifth catalyst layer 60 per unit volume of the portion of the substrate 10 provided with the fifth catalyst layer 60 is calculated from the formula: (Mass of fifth catalyst layer 60) / ((Volume of substrate 10) × (Average length L60 of fifth catalyst layer 60 / Length L10 of substrate 10)).

The above descriptions with respect to "the mass of the catalyst composition" are also applied to "the mass of the fifth catalyst layer 60". Upon application, "the catalyst composition" is replaced with "the fifth catalyst layer 60". In the case where the information (e.g., composition and amounts) of raw materials used for producing the fifth catalyst layer 60 is known, the mass of the fifth catalyst layer 60 can be determined from the information of raw materials used for producing the fifth catalyst layer 60.

The above descriptions with respect to the method for measuring the average length L20 of the first catalyst layer 20 in the first embodiment are also applied to the method for measuring the average length L60 of the fifth catalyst layer 60. Upon application, "the first catalyst layer 20" and "the average length L20" are replaced with "the fifth catalyst layer 60" and "the average length L60", respectively.

From the viewpoint of improving the exhaust gas purification performance, it is preferable that the fifth catalyst layer 60 contains Pd. Pd contained in the fifth catalyst layer 60 is in the form capable of functioning as a catalytically active component, for example, in the form of a catalytically active component containing Pd, such as metal Pd, an alloy containing Pd, a compound containing Pd (e.g., an oxide of Pd), or the like. From the viewpoint of improving the exhaust gas purification performance, it is preferable that the catalytically active component containing Pd is in the form of a particle.

From the viewpoint of balancing the exhaust gas purification performance and the cost, the content of Pd in terms of metal in the fifth catalyst layer 60 is preferably 0.50% by mass or more and 10% by mass or less, more preferably 1.0% by mass or more and 7.0% by mass or less, and still more preferably 2.0% by mass or more and 5.0% by mass or less, based on the mass of the fifth catalyst layer 60. The content of Pd in terms of metal in the fifth catalyst layer 60 can be determined in the same manner as the content of Pt in terms of metal in the catalyst composition of the present invention.

The fifth catalyst layer 60 may contain a noble metal element other than Pd. Examples of the noble metal element other than Pd include Au, Ag, Rh, Pt, Ir, Ru, Os, and the like. The noble metal element other than Pd contained in the fifth catalyst layer 60 is in the form capable of functioning as a catalytically active component, for example, in the form of a catalytically active component containing the noble metal element other than Pd, such as metal, an alloy containing the noble metal element, a compound containing the noble metal element (e.g., an oxide of the noble metal element), or the like. From the viewpoint of improving the exhaust gas purification performance, it is preferable that the catalytically active component containing the noble metal element other than Pd is in the form of a particle.

In the case where the fifth catalyst layer 60 contains Pd and the noble metal element other than Pd, Pd and the noble metal element other than Pd may form an alloy, thereby decreasing the active sites of Pd participating in exhaust gas purification. Accordingly, it is preferable that the fifth catalyst layer 60 is substantially free from the noble metal element other than Pd. The meanings of the expressions "substantially free from the noble metal element other than Pd" and "the content of the noble metal element other than Pd in terms of metal", and the method for determining the content of the noble metal element other than Pd are the same as described above.

The fifth catalyst layer 60 may contain one or two or more alkaline-earth metal elements. The alkaline-earth metal element is selected from Be, Mg, Ca, Sr, Ba and Ra.

From the viewpoint of maintaining oxidized state of Pd, the content of the alkaline-earth metal element in terms of metal in the fifth catalyst layer 60 is preferably 1.0% by mass or more and 10.0% by mass or less, more preferably 2.0% by mass or more and 6.0% by mass or less, and still more preferably 3.0% by mass or more and 4.0% by mass or less, based on the mass of the fifth catalyst layer 60. The meaning of the expression "the content of the alkaline-earth metal element in terms of metal", and the method for determining the content of the alkaline-earth metal element are the same as described above.

In the fifth catalyst layer 60, the form in which the alkaline-earth metal element is present is not particularly limited. In the fifth catalyst layer 60, the alkaline-earth metal element can be present in one or two or more forms selected from, for example, an oxide, a carbonate, a nitrate and a sulfate.

The fifth catalyst layer 60 may contain one or two or more carriers. In the case where the fifth catalyst layer 60 contains a carrier, it is preferable that at least part of a catalytically active component is supported on the carrier. The descriptions with respect to the carrier (including the descriptions with respect to an inorganic oxide), the meaning of "supported" and the confirmation method of "supported" are the same as described above.

As shown in Figure 6, the second catalyst layer 30 is provided on the upside of the first catalyst layer 20 and the fifth catalyst layer 60. The meanings of the expression that "the second catalyst layer 30 is provided on the upside of the first catalyst layer 20" and the expression "the main surface of the first catalyst layer 20" are the same as described above. The expression that "the second catalyst layer 30 is provided on the upside of the fifth catalyst layer 60" means that part or the whole of the second catalyst layer 30 is present on, of the two main surfaces of the fifth catalyst layer 60, the main surface opposite to the main surface on the partition wall 12 side of the substrate 10. The expression "the main surface of the fifth catalyst layer 60" means an outer surface of the fifth catalyst layer 50, the outer surface extending in the exhaust gas flow direction X. The second catalyst layer 30 may be provided directly or via another layer on the main surface of the fifth catalyst layer 60. The second catalyst layer 30 may be provided so that the second catalyst layer 30 covers part or the whole of the main surface of the fifth catalyst layer 60.

From the viewpoint of balancing the exhaust gas purification performance and the cost, the mass (mass after calcination) of the second catalyst layer 30 per unit volume of the portion of the substrate 10 provided with the second catalyst layer 30 is preferably 20 g/L or more and 150 g/L or less, more preferably 50 g/L or more and 120 g/L or less, and still more preferably 70 g/L or more and 100 g/L or less.

The mass of the second catalyst layer 30 per unit volume of the portion of the substrate 10 provided with the second catalyst layer 30 can be determined in the same manner as in the first embodiment.

In the catalyst 1C, the second catalyst layer 30 is provided on the upside of the first catalyst layer 20 and the fifth catalyst layer 60. Thus, exhaust gas that has flowed in from the end (opening) on the exhaust gas inflow side of the cell 13 contacts with the second catalyst layer 30, and then contacts with the first catalyst layer 20 and the fifth catalyst layer 60. When the exhaust gas contacts with the second catalyst layer 30, the exhaust gas is purified by a catalytically active component (e.g., Rh) in the second catalyst layer 30. When the environment in which the catalyst 1C is placed is a low temperature environment immediately after start-up of an internal combustion engine, the catalytically active component (e.g., Rh) in the second catalyst layer 30 is not fully activated, and thus the exhaust gas purification performance of the second catalyst layer 30 is low. Therefore, the second catalyst layer 30 may not sufficiently purify NOx. However, NOx that is not purified by the second catalyst layer 30 in the low temperature environment is adsorbed onto Sr in the first catalyst layer 20, maintained on Sr in first catalyst layer 20 until the environment in which the first catalyst layer 20 and the fifth catalyst layer 60 are placed becomes a high temperature environment, and released after the environment in which the first catalyst layer 20 and the fifth catalyst layer 60 are placed becomes a high temperature environment (i.e., after a catalytically active component (e.g., Pt) in the first catalyst layer 20 and/or a catalytically active component (e.g., Pd) in the fifth catalyst layer 60 are fully activated). The released NOx is more effectively purified by the activated catalytically active component (the catalytically active component (e.g., Pt) in the first catalyst layer 20 and/or the catalytically active component (e.g., Pd) in the fifth catalyst layer 60). In this manner, Sr in the first catalyst layer 20 can compensate for the exhaust gas purification performance of the catalyst 1C in the low temperature environment by maintaining NOx adsorbed in the low-temperature environment until the environment becomes a high temperature environment.

When the content of Sr in terms of metal in the first catalyst layer 20 is too small, the effect of Sr is not fully demonstrated. When the content of Sr in terms of metal in the first catalyst layer 20 is too large, the exhaust gas purification performance of Pt in the first catalyst layer 20 in a low temperature environment is decreased. Sr stabilizes oxidized state of Pt and inactivates Pt, which is considered to be associated with the decrease in the exhaust gas purification performance of Pt. When the content of Sr in terms of metal in the first catalyst layer 20 is 0.1% by mass or more and 9.0% by mass or less based on the mass of the first catalyst layer 20, it is possible to more effectively realize both the exhaust gas purification performance in a low temperature environment and the ability to maintain NOx adsorbed in a low-temperature environment until the environment becomes a high temperature environment, while utilizing Pt.

The catalyst 1C can be produced by the following method. The production conditions and the like of the catalyst 1C are the same as those of the catalyst 1A.

The first catalyst layer 20 can be formed by coating a portion on the exhaust gas outflow side of the substrate 10 with a slurry for forming the first catalyst layer 20, drying the slurry, and calcining the slurry as necessary. The fifth catalyst layer 60 can be formed by coating a portion on the exhaust gas inflow side of the substrate 10 with a slurry for forming the fifth catalyst layer 60, drying the slurry, and calcining the slurry as necessary.

The catalyst 1C can be produced by forming the first catalyst layer 20 and the fifth catalyst layer 60 on the substrate 10 and then forming the second catalyst layer 30 on the upside of the first catalyst layer 20 and the fifth catalyst layer 60.

The fifth catalyst layer 60 can be prepared by mixing a Pd supply source (e.g., a Pd salt) and other component(s) (e.g., an inorganic oxide, a binder, a solvent, and the like). The descriptions with respect to the Pd salt, the inorganic oxide, the binder and the solvent are the same as described above.

### <<Exhaust gas purification system>>

The exhaust gas purification system of the present invention will now be described.

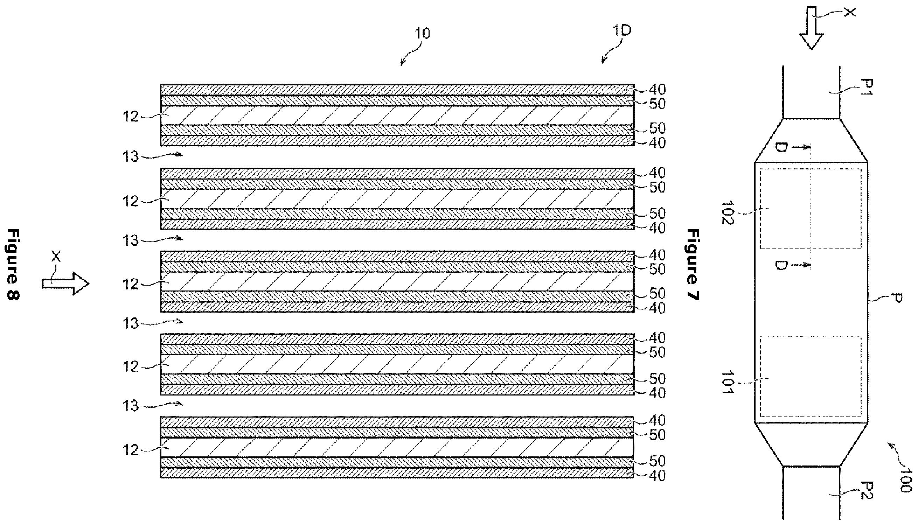

Hereinafter, an exhaust gas purification system 100 according to one embodiment of the present invention will be described with reference to Figures 7 and 8.

As shown in Figure 7, the exhaust gas purification system 100 includes an exhaust pipe P, a first exhaust gas purification catalyst 101 (which may be referred to as a "first catalyst 101" in the present specification) provided on the downstream side of the exhaust gas path in the exhaust pipe P, and a second exhaust gas purification catalyst 102 (which may be referred to as a "second catalyst 102" in the present specification) provided on the upstream side of the exhaust gas path in the exhaust pipe P.

One end P1 of the exhaust pipe P is connected to an internal combustion engine (e.g., a gasoline engine), and exhaust gas emitted from the internal combustion engine flows through the exhaust pipe P from the one end P1 to the other end P2. That is, the exhaust pipe P forms an exhaust gas path through which exhaust gas flows. In the drawings, the exhaust gas flow direction is denoted by the reference sign X. The exhaust gas flowing through the exhaust pipe P is treated by the second catalyst 102 provided on the upstream side of the exhaust gas path in the exhaust pipe P, and the exhaust gas that passed through the second catalyst 102 is treated by the first catalyst 101 provided on the downstream side of the exhaust gas path in the exhaust pipe P.

The first catalyst 101 includes a first substrate and a catalyst layer provided on the first substrate. The catalyst layer provided on the first substrate is composed of the catalyst composition of the present invention. Thus, the above descriptions with respect to the catalyst composition of the present invention are also applied to the catalyst layer provided on the first substrate. Upon application, "the catalyst composition of the present invention" is replaced with "the catalyst layer provided on the first substrate".

Examples of an exhaust gas purification catalyst that can be used as the first catalyst 101 include the catalyst 1A, an exhaust gas purification catalyst differing from the catalyst 1A in that the second catalyst layer 30 is omitted, the catalyst 1B, an exhaust gas purification catalyst differing from the catalyst 1B in that one or two or more of the second catalyst layer 30, the third catalyst layer 40 and the fourth catalyst layer 50 are omitted (e.g., an exhaust gas purification catalyst differing from the catalyst 1B in that the second catalyst layer 30 is omitted, in that the third catalyst layer 40 is omitted, in that the fourth catalyst layer 50 is omitted, in that the second catalyst layer 30 and the third catalyst layer 40 are omitted, or in that the second catalyst layer 30 and the fourth catalyst layer 50 are omitted), the catalyst 1C, an exhaust gas purification catalyst differing from the catalyst 1C in that the second catalyst layer 30 is omitted, and the like. In the case where these exhaust gas purification catalysts are used as the first catalyst 101, the substrate 10 corresponds to "the first substrate", and the first catalyst layer 20 corresponds to "the catalyst layer provided on the first substrate". From the viewpoint of improving the exhaust gas purification performance of an exhaust gas purification catalyst differing from the catalyst 1B in that one or two or more of the second catalyst layer 30, the third catalyst layer 40 and the fourth catalyst layer 50 are omitted, at least one of the second catalyst layer 30 and the third catalyst layer 40 is preferably provided, and both of the second catalyst layer 30 and the third catalyst layer 40 are more preferably provided.

The second catalyst 102 includes a second substrate and a catalyst layer provided on the second substrate.

Examples of an exhaust gas purification catalyst that can be used as the second catalyst 102 include an exhaust gas purification catalyst 1D (which may be referred to as a "catalyst 1D" in the present specification) shown in Figure 8, or an exhaust gas purification catalyst differing from the catalyst 1D in that the fourth catalyst layer 50 is omitted. In the case where the catalyst 1D or the exhaust gas purification catalyst differing from the catalyst 1D in that the fourth catalyst layer 50 is omitted are used as the second catalyst 102, the substrate 10 corresponds to "the second substrate", and the third catalyst layer 40 corresponds to "the catalyst layer provided on the second substrate".

Hereinafter, the catalyst 1D will be described with reference to Figure 8. In the catalyst 1D, the same members as those of the catalyst 1A or 1B are denoted by the same reference signs as those of the catalyst 1A or 1B. Unless otherwise specified, the above descriptions with respect to the catalysts 1A and 1B are also applied to the catalyst 1D.

As shown in Figure 8, the catalyst 1D includes a substrate 10, a third catalyst layer 40 provided on the substrate 10, and a fourth catalyst layer 50 provided on the substrate 10. Unless otherwise specified, the above descriptions with respect to the substrate 10 in the first embodiment, and the descriptions with respect to the third catalyst layer 40 and the fourth catalyst layer 50 in the second embodiment are also applied to the catalyst 1D.

As shown in Figure 8, the third catalyst layer 40 is provided on the upside of the fourth catalyst layer 50. The meanings of the expression that "the third catalyst layer 40 is provided on the upside of the fourth catalyst layer 50" and the expression "the main surface of the fourth catalyst layer 50" are the same as defined above. The third catalyst layer 40 may be provided directly or via another layer on the main surface of the fourth catalyst layer 50. The third catalyst layer 40 may be provided so that the third catalyst layer 40 covers part or the whole of the main surface of the fourth catalyst layer 50.

As shown in Figure 8, the third catalyst layer 40 extends from the end on the exhaust gas inflow side of the partition wall 12 to the end on the exhaust gas outflow side of the partition wall 12 along the exhaust gas flow direction X. The third catalyst layer 40 may extend from the end on the exhaust gas inflow side of the partition wall 12 along the exhaust gas flow direction X so as not to reach the end on the exhaust gas outflow side of the partition wall 12, or may extend from the end on the exhaust gas outflow side of the partition wall 12 along the direction opposite to the exhaust gas flow direction X so as not to reach the end on the exhaust gas inflow side of the partition wall 12.

As shown in Figure 8, the fourth catalyst layer 50 is provided on a surface of the partition wall 12 of the substrate 10. The surface of the partition wall 12 means an outer surface of the partition wall 12, the outer surface extending in the exhaust gas flow direction X. The fourth catalyst layer 50 may be provided directly or via another layer on the surface of the partition wall 12.

As shown in Figure 8, the fourth catalyst layer 50 has a structure rising from the surface of the partition wall 12 toward the cell 13 side (hereinafter referred to as a "rising structure"). The fourth catalyst layer 50 may be composed only of the rising structure, or may have a structure present inside the partition wall 12 (hereinafter referred to as an "internal structure") in addition to the rising structure. Alternatively, the fourth catalyst layer 50 may be composed only of the internal structure.

As shown in Figure 8, the fourth catalyst layer 50 extends from the end on the exhaust gas inflow side of the partition wall 12 to the end on the exhaust gas outflow side of the partition wall 12 along the exhaust gas flow direction X. The fourth catalyst layer 50 may extend from the end on the exhaust gas inflow side of the partition wall 12 along the exhaust gas flow direction X so as not to reach the end on the exhaust gas outflow side of the partition wall 12, or may extend from the end on the exhaust gas outflow side of the partition wall 12 along the direction opposite to the exhaust gas flow direction X so as not to reach the end on the exhaust gas inflow side of the partition wall 12.

In the exhaust gas purification system 100, the second catalyst 102 is provided on the upstream side of the first catalyst 101. Thus, exhaust gas flowing through the exhaust pipe P passes through the second catalyst 102, and then passes through the first catalyst 101. When the exhaust gas passes through the second catalyst 102, the exhaust gas is purified by the catalyst layer provided on the second substrate. When the environment in which the second catalyst 102 is placed is a low temperature environment immediately after start-up of an internal combustion engine, a catalytically active component in the second catalyst 102 is not fully activated, and thus the exhaust gas purification performance of the second catalyst 102 is low. Therefore, the second catalyst 102 may not sufficiently purify NOx. However, when passing through the first catalyst 101, NOx that is not purified by the second catalyst 102 in the low temperature environment is adsorbed onto Sr in the catalyst layer provided on the first substrate, maintained on Sr in the catalyst layer until the environment in which the first catalyst 101 is placed becomes a high temperature environment, and released after the environment in which the first catalyst 101 is placed becomes a high temperature environment (i.e., after a catalytically active component in a catalyst layer(s) provided on the first substrate (e.g., the first catalyst layer 20, the second catalyst layer 30, and the like) is fully activated). The released NOx is more effectively purified by the activated catalytically active component (the catalytically active component in the catalyst layer(s) provided on the first substrate (e.g., the first catalyst layer 20, the second catalyst layer 30, and the like)). In this manner, Sr in the catalyst layer provided on the first substrate can compensate for the exhaust gas purification performance of the exhaust gas purification system 100 in the low temperature environment by maintaining NOx adsorbed in the low-temperature environment until the environment becomes a high temperature environment.

When the content of Sr in terms of metal in the catalyst layer provided on the first substrate is too small, the effect of Sr is not fully demonstrated. When the content of Sr in terms of metal in the catalyst layer provided on the first substrate is too large, the exhaust gas purification performance of Pt in the catalyst layer in a low temperature environment is decreased. Sr stabilizes oxidized state of Pt and inactivates Pt, which is considered to be associated with the decrease in the exhaust gas purification performance of Pt. When the content of Sr in terms of metal in the catalyst layer provide on the first substrate is 0.1% by mass or more and 9.0% by mass or less based on the mass of the catalyst layer, it is possible to more effectively realize both the exhaust gas purification performance in a low temperature environment and the ability to maintain NOx adsorbed in a low-temperature environment until the environment becomes a high temperature environment, while utilizing Pt.

### EXAMPLES

The present invention will be more specifically described with reference to Examples and Comparative Examples.

### <Example 1>

### (1) Preparation of slurry for forming lower layer

An OSC material having the following composition was prepared.

Content of Ce in terms of CeO₂: 40.0% by mass, Content of Zr in terms of ZrO₂: 50.0% by mass, Content of a rare earth element other than Ce in terms of oxide: 10.0% by mass
To a mixing vessel, platinum nitrate solution, the OSC material, La₂O₃-modified alumina (La₂O₃ modification content: 1% by mass), strontium nitrate, alumina sol and water were added, mixed and stirred to prepare a slurry for forming a lower layer. The contents of components in the slurry for forming a lower layer were adjusted so that the content of Pt in terms of metal was 0.5% by mass, the content of the OSC material was 40.0% by mass, the content of the La₂O₃-modified alumina was 43.6% by mass, the content of Sr in terms of metal was 5.0% by mass, and the solid content of the alumina sol was 10.0% by mass, based on the mass (100% by mass) of a lower layer after calcination. Note that strontium nitrate (Sr(NO₃)₂) is converted to strontium oxide (SrO) by calcination.

### (2) Formation of lower layer

A flow-through type substrate was prepared, which included cells each extending in the axial direction and separated by a partition wall having a thickness of 50 to 70 µm, at a density of 600 cells/inch² in a plane perpendicular to the axial direction, and had a volume of 1.0 L.

The flow-through type substrate was dipped in the slurry for forming a lower layer. The flow-through type substrate coated with the slurry for forming a lower layer was dried at 150°C for 0.5 hours, and then calcined at 500°C for 1 hour to form a lower layer. The mass of the lower layer per unit volume of the portion of the flow-through type substrate provided with the lower layer was 140 g/L.

### (3) Preparation of slurry for forming upper layer

An OSC material having the following composition was prepared.

Content of Ce in terms of CeO₂: 15.0% by mass, Content of Zr in terms of ZrO₂: 75.0% by mass, Content of a rare earth element other than Ce in terms of oxide: 10.0% by mass
To a mixing vessel, rhodium nitrate solution, the OSC material, La₂O₃-modified alumina (La₂O₃ modification content: 1% by mass), alumina sol and water were added, mixed and stirred to prepare a slurry for forming an upper layer. The contents of components in the slurry for forming an upper layer were adjusted so that the content of Rh in terms of metal was 0.2% by mass, the content of the OSC material was 50.0% by mass, the content of the La₂O₃-modified alumina was 39.8% by mass, and the solid content of the alumina sol was 10.0% by mass, based on the mass (100% by mass) of an upper layer after calcination.

### (4) Formation of upper layer

The flow-through type substrate on which the lower layer was formed was dipped in the slurry for forming an upper layer. The flow-through type substrate coated with the slurry for forming an upper layer was dried at 150°C for 0.5 hours, and then calcined at 500°C for 1 hour to form an upper layer on the lower layer. The mass of the upper layer per unit volume of the portion of the flow-through type substrate provided with the upper layer was 80 g/L.

As described above, an exhaust gas purification catalyst (which is referred to as a "catalyst") including the lower layer formed on the flow-through type substrate and the upper layer formed on the lower layer was produced. The produced catalyst was used in the following test example.

### <Example 2>

A catalyst was produced in the same manner as in Example 1, except that in the production of the catalyst, the contents of components in the slurry for forming a lower layer were adjusted so that the content of Pt in terms of metal was 0.5% by mass, the content of the OSC material was 40.0% by mass, the content of the La₂O₃-modified alumina was 48.3% by mass, the content of Sr in terms of metal was 1.0% by mass, and the solid content of the alumina sol was 10.0% by mass, based on the mass (100% by mass) of the lower layer after calcination. In the catalyst of Example 2, the mass of the lower layer per unit volume of the portion of the flow-through type substrate provided with the lower layer was 140 g/L.

### <Example 3>

A catalyst was produced in the same manner as in Example 1, except that in the production of the catalyst, the contents of components in the slurry for forming a lower layer were adjusted so that the content of Pt in terms of metal was 0.5% by mass, the content of the OSC material was 40.0% by mass, the content of the La₂O₃-modified alumina was 47.1% by mass, the content of Sr in terms of metal was 2.0% by mass, and the solid content of the alumina sol was 10.0% by mass, based on the mass (100% by mass) of the lower layer after calcination. In the catalyst of Example 3, the mass of the lower layer per unit volume of the portion of the flow-through type substrate provided with the lower layer was 140 g/L.

### <Example 4>

A catalyst was produced in the same manner as in Example 1, except that in the production of the catalyst, the contents of components in the slurry for forming a lower layer were adjusted so that the content of Pt in terms of metal was 0.5% by mass, the content of the OSC material was 40.0% by mass, the content of the La₂O₃-modified alumina was 45.4% by mass, the content of Sr in terms of metal was 3.5% by mass, and the solid content of the alumina sol was 10.0% by mass, based on the mass (100% by mass) of the lower layer after calcination. In the catalyst of Example 4, the mass of the lower layer per unit volume of the portion of the flow-through type substrate provided with the lower layer was 140 g/L.

### <Example 5>

A catalyst was produced in the same manner as in Example 1, except that in the production of the catalyst, the contents of components in the slurry for forming a lower layer were adjusted so that the content of Pt in terms of metal was 0.5% by mass, the content of the OSC material was 40.0% by mass, the content of the La₂O₃-modified alumina was 41.2% by mass, the content of Sr in terms of metal was 7.0% by mass, and the solid content of the alumina sol was 10.0% by mass, based on the mass (100% by mass) of the lower layer after calcination. In the catalyst of Example 5, the mass of the lower layer per unit volume of the portion of the flow-through type substrate provided with the lower layer was 140 g/L.

### <Comparative Example 1>

A catalyst was produced in the same manner as in Example 1, except that in the production of the catalyst, magnesium nitrate was used instead of strontium nitrate, and the contents of components in the slurry for forming a lower layer were adjusted so that the content of Pt in terms of metal was 0.5% by mass, the content of the OSC material was 40.0% by mass, the content of the La₂O₃-modified alumina was 41.2% by mass, the content of Mg in terms of metal was 5.0% by mass, and the solid content of the alumina sol was 10.0% by mass, based on the mass (100% by mass) of the lower layer after calcination. In the catalyst of Comparative Example 1, the mass of the lower layer per unit volume of the portion of the flow-through type substrate provided with the lower layer was 140 g/L. Note that magnesium nitrate (Mg(NO₃)₂) is converted to magnesium oxide (MgO) by calcination.

### <Comparative Example 2>

A catalyst was produced in the same manner as in Example 1, except that in the production of the catalyst, barium nitrate was used instead of strontium nitrate, and the contents of components in the slurry for forming a lower layer were adjusted so that the content of Pt in terms of metal was 0.5% by mass, the content of the OSC material was 40.0% by mass, the content of the La₂O₃-modified alumina was 43.9% by mass, the content of Ba in terms of metal was 5.0% by mass, and the solid content of the alumina sol was 10.0% by mass, based on the mass (100% by mass) of the lower layer after calcination. In the catalyst of Comparative Example 2, the mass of the lower layer per unit volume of the portion of the flow-through type substrate provided with the lower layer was 140 g/L. Note that barium nitrate (Ba(NO₃)₂) is converted to barium oxide (BaO) by calcination.

### <Comparative Example 3>

A catalyst was produced in the same manner as in Example 1, except that in the production of the catalyst, the contents of components in the slurry for forming a lower layer were adjusted so that the content of Pt in terms of metal was 0.5% by mass, the content of the OSC material was 40.0% by mass, the content of the La₂O₃-modified alumina was 37.7% by mass, the content of Sr in terms of metal was 10.0% by mass, and the solid content of the alumina sol was 10.0% by mass, based on the mass (100% by mass) of the lower layer after calcination. In the catalyst of Comparative Example 3, the mass of the lower layer per unit volume of the portion of the flow-through type substrate provided with the lower layer was 140 g/L.

### <Comparative Example 4>

A catalyst was produced in the same manner as in Example 1, except that in the production of the catalyst, magnesium nitrate was used instead of strontium nitrate, and the contents of components in the slurry for forming a lower layer were adjusted so that the content of Pt in terms of metal was 0.5% by mass, the content of the OSC material was 40.0% by mass, the content of the La₂O₃-modified alumina was 36.2% by mass, the content of Mg in terms of metal was 8.0% by mass, and the solid content of the alumina sol was 10.0% by mass, based on the mass (100% by mass) of the lower layer after calcination. In the catalyst of Comparative Example 4, the mass of the lower layer per unit volume of the portion of the flow-through type substrate provided with the lower layer was 140 g/L. Note that magnesium nitrate (Mg(NO₃)₂) is converted to magnesium oxide (MgO) by calcination.

### <Test Example>

### (1) Preparation of evaluation sample

The catalyst was subjected to coring to 30 mL. Using a quartz tubular furnace, the cored catalyst was subjected to a heat treatment under the conditions of 1000°C × 20 hours in an atmosphere containing a 10% by volume H₂O in the following FC mode. The catalyst after the heat treatment was used as an evaluation sample.

FC mode: Model gas having the following composition (600 mL/min) and air (600 mL/min) were made to flow alternately.

Model gas flow rate: C₃H₆ 1.2 mL/min, O₂ 14.2 mL/min, and N₂ 584.6 mL/min (600 mL/min in total).

10% by volume H₂O: Water was vaporized from a tank containing water and incorporated as water vapor into the model gas or the air. The saturated water vapor pressure was adjusted to a water vapor amount of the above-mentioned % by volume by regulating the temperature.

### (2) Evaluation of NOx adsorption maintenance temperature and NOx adsorption amount (integrated value of NOx concentration)

The NOx adsorption maintenance temperature was evaluated for the evaluation samples of Example 1 and Comparative Examples 1 to 2.

The NOx adsorption amount (integrated value of NOx concentration) was evaluated for the evaluation samples of Example 2 to 5 and Comparative Examples 3 to 4.

As an evaluation method, a temperature programmed desorption (TPD) method was used. The TPD method is a method in which probe molecules (e.g., NOx) are allowed to adsorb on a solid sample, and then the amount of desorbed gas generated by continuously raising the temperature is measured, and is a common characterization performed in order to examine the basic site amount or basic site strength of a solid base catalyst. The evaluation method was performed as follows.

Pretreatment gas (NO: 1% by volume, O₂: 20% by volume, N₂: balance) was distributed to the evaluation sample for 1 hour at 50°C to adsorb NO on the evaluation sample. The temperature was then increased to 800°C at a rate of 10°C/min under a He atmosphere. The NOx concentration (ppm) desorbed from the evaluation sample was detected every 0.5 seconds to obtain a NOx concentration profile curve with temperature on the x-axis and NOx concentration (ppm) on the y-axis.

In the NOx concentration profile curve, the integrated value of the concentration in the region of 400°C or more (the area under the curve in the region of 400°C or more) and the integrated value of the concentration in the region of 500°C or more (the area under the curve in the region of 500°C or more) were defined as an "integrated value of NOx concentration at 400°C or more" and an "integrated value of NOx concentration at 500°C or more", respectively. In the NOx concentration profile curve, the maximum value at 400°C or more was defined as X, and the temperature at which the detected value first becomes 1/10 of X during the temperature increasing process after the maximum value was shown was defined as a "NOx adsorption maintenance temperature. The results are shown in Tables 1 and 2. In Table 2, the "integrated value of NOx concentration at 400°C or more" and "integrated value of NOx concentration at 500°C or more" are expressed as relative values when the values of Comparative Example 4 were set to 1.

### (3) Evaluation of exhaust gas purification performance (T50)

T50 was evaluated for the evaluation samples of Example 2 to 5 and Comparative Examples 3 to 4.

The evaluation sample was placed in an exhaust gas path. While exhaust model gas (CO: 0.50% by volume, H₂: 0.17% by volume, O₂: 0.50% by volume, NO: 400 ppm, C₃H₆: 1180 ppm, CO₂: 14% by volume, H₂O: 10% by volume, and N₂: balance) was allowed to flow through at a space velocity of 100000/h, the purification rate of nitrogen oxide (NOx) was continuously measured with the temperature increase at an increasing temperature of 20°C/minute to 500°C. The temperature at which the purification rate of nitrogen oxide (NOx) reached 50% (light-off temperature T50) (°C) was determined. The light-off temperature T50 was determined while the temperature was rising. The results are shown in Table 2.

### [Table 1]

**Table 1**

| | Catalyst | | | | NOx adsorption maintenance temperature |
|---|---|---|---|---|---|
| | Upper layer | Lower layer | | | |
| | Catalytically active component | Catalytically active component | Form of existence of Sr, Mg or Ba | Content of Sr, Mg or Ba in terms of metal | |
| Example 1 | Rh | Pt | SrO | 5.0% by mass | 550°C |
| Comparative Example 1 | Rh | Pt | MgO | 5.0% by mass | 450°C |
| Comparative Example 2 | Rh | Pt | BaO | 5.0% by mass | 500°C |

### [Table 2]

**Table 2**

| | Catalyst | | | | Integrated value of NOx concentration at 400°C or more (relative value when the value of Comparative Example 4 was set to 1) | Integrated value of NOx concentration at 500°C or more (relative value when the value of Comparative Example 4 was set to 1) | Purification performance T50 (NOx) |
|---|---|---|---|---|---|---|---|
| | Upper layer | Lower layer | | | | | |
| | Catalytically active component | Catalytically active component | Form of existence of Sr or Mg | Content of Sr or Mg in terms of metal | | | |
| Example 2 | Rh | Pt | SrO | 1.0% by mass | 1.47 | 2.41 | 296°C |
| Example 3 | Rh | Pt | SrO | 2.0% by mass | 1.44 | 3.54 | 328°C |
| Example 4 | Rh | Pt | SrO | 3.5% by mass | 1.67 | 4.45 | 312°C |
| Example 5 | Rh | Pt | SrO | 7.0% by mass | 1.98 | 11.11 | 332°C |
| Comparative Example 3 | Rh | Pt | SrO | 10.0% by mass | 1.85 | 9.17 | 396°C |
| Comparative Example 4 | Rh | Pt | MgO | 8.0% by mass | 1.00 | 1.00 | 247°C |

As shown in Tables 1 and 2, Examples 1 to 5, which satisfy the conditions that the lower layer in the catalyst contains Pt and Sr, and that the content of Sr in terms of metal is 0.1% by mass or more and 9.0% by mass or less based on the mass of the lower layer, had a higher exhaust gas purification performance in a low temperature environment, and a higher ability to maintain NOx adsorbed in a low temperature environment until the environment becomes a high temperature environment, compared to Comparative Examples 1 to 4, which do not satisfy the above conditions.

### DESCRIPTION OF REFERENCE SIGNS

- P: Exhaust pipe of internal combustion engine
- 1A: Exhaust gas purification catalyst according to first embodiment
- 1B: Exhaust gas purification catalyst according to second embodiment
- 1C: Exhaust gas purification catalyst according to third embodiment
- 10: Substrate
- 11: Tubular member
- 12: Partition wall
- 13: Cell
- 14: First sealing member
- 15: Second sealing member
- 20: First catalyst layer
- 30: Second catalyst layer
- 40: Third catalyst layer
- 50: Fourth catalyst layer
- 60: Fifth catalyst layer
- 100: Exhaust gas purification system
- 101: First exhaust gas purification catalyst
- 102: Second exhaust gas purification catalyst

## Claims

1. An exhaust gas purification catalyst composition comprising Pt and Sr, wherein a content of Sr in terms of metal is 0.1% by mass or more and 9.0% by mass or less based on a mass of the exhaust gas purification catalyst composition.

2. The exhaust gas purification catalyst composition as claimed in claim 1, wherein a content of an alkaline-earth metal element other than Sr in terms of metal is 4.0% by mass or less based on the mass of the exhaust gas purification catalyst composition.

3. The exhaust gas purification catalyst composition as claimed in claim 1, wherein Sr is present in one or two forms selected from SrO and SrCO₃.

4. The exhaust gas purification catalyst composition as claimed in claim 1, wherein the exhaust gas purification catalyst composition comprises a modified alumina comprising La, and wherein a content of La derived from the modified alumina in terms of La₂O₃ is 0.20% by mass or more and 5.0% by mass or less based on the mass of the exhaust gas purification catalyst composition.

5. An exhaust gas purification catalyst comprising a substrate and a first catalyst layer provided on the substrate, wherein the first catalyst layer is composed of the exhaust gas purification catalyst composition as claimed in any one of claims 1 to 4.

6. The exhaust gas purification catalyst as claimed in claim 5, wherein the exhaust gas purification catalyst further comprises a second catalyst layer provided on the substrate and/or a third catalyst layer provided on the substrate, wherein the second catalyst layer is provided on an upside of the first catalyst layer, and wherein the third catalyst layer is provided on an upstream side of the first catalyst layer.

7. The exhaust gas purification catalyst as claimed in claim 6, wherein the second catalyst layer and/or the third catalyst layer comprises Rh.

8. The exhaust gas purification catalyst as claimed in claim 6, wherein a content of an alkaline-earth metal element in terms of metal in the second catalyst layer is 5.0% by mass or less based on a mass of the second catalyst layer, and wherein a content of an alkaline-earth metal element in terms of metal in the third catalyst layer is 5.0% by mass or less based on a mass of the third catalyst layer.

9. An exhaust gas purification system comprising:
an exhaust gas path through which exhaust gas flows;
a first exhaust gas purification catalyst provided on a downstream side of the exhaust gas path; and
a second exhaust gas purification catalyst provided on an upstream side of the exhaust gas path,
wherein the first exhaust gas purification catalyst comprises a first substrate and a catalyst layer provided on the first substrate, and
wherein the catalyst layer provided on the first substrate is composed of the exhaust gas purification catalyst composition as claimed in any one of claims 1 to 4.

10. The exhaust gas purification system as claimed in claim 9, wherein the second exhaust gas purification catalyst comprises a second substrate and a catalyst layer provided on the second substrate.

11. The exhaust gas purification system as claimed in claim 10, wherein the catalyst layer provided on the second substrate comprises Rh.

12. The exhaust gas purification system as claimed in claim 10, wherein a content of an alkaline-earth metal element in terms of metal in the catalyst layer provided on the second substrate is 5.0% by mass or less based on a mass of the catalyst layer provided on the second substrate.
